(19) **Europäisches Patentamt / European Patent Office / Office européen des brevets**

(11) **EP 4 435 686 B1**

(12) **EUROPEAN PATENT SPECIFICATION**

(45) Date of publication and mention of the grant of the patent:
**21.01.2026 Bulletin 2026/04**

(21) Application number: **22892917.0**

(22) Date of filing: **14.11.2022**

(51) International Patent Classification (IPC):
**G06Q 10/06** (2023.01)

(52) Cooperative Patent Classification (CPC):
**G06Q 10/06; C25B 1/34; C25B 15/00; C25B 15/023; C25B 15/029; C25B 15/031; C25B 15/08**

(86) International application number:
**PCT/JP2022/042191**

(87) International publication number:
**WO 2023/085419 (19.05.2023 Gazette 2023/20)**

(54) **OPERATION SUPPORT DEVICE, OPERATION SUPPORT METHOD, AND OPERATION SUPPORT PROGRAM**

BETRIEBSUNTERSTÜTZUNGSVORRICHTUNG, BETRIEBSUNTERSTÜTZUNGSVERFAHREN UND BETRIEBSUNTERSTÜTZUNGSPROGRAMM

SYSTÈME D'AIDE AU FONCTIONNEMENT, PROCÉDÉ D'AIDE AU FONCTIONNEMENT ET PROGRAMME D'AIDE AU FONCTIONNEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.11.2021 JP 2021185766**

(43) Date of publication of application:
**25.09.2024 Bulletin 2024/39**

(73) Proprietor: **Asahi Kasei Kabushiki Kaisha**
**Tokyo 1000006 (JP)**

(72) Inventors:
• **SUZUKI Yuto**
**Tokyo 100-0006 (JP)**
• **YOSHINO Hiroaki**
**Tokyo 100-0006 (JP)**

• **SUGIMOTO Manabu**
**Tokyo 100-0006 (JP)**
• **SUGANO Susumu**
**Tokyo 100-0006 (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| EP-A1- 3 690 792 | WO-A1-2019/059321 |
| WO-A1-2019/059321 | WO-A2-2011/054005 |
| JP-A- 2002 366 023 | JP-A- 2002 366 023 |
| JP-A- 2014 070 258 | JP-A- 2014 070 258 |
| JP-A- 2021 105 194 | JP-A- 2021 105 194 |

# EP 4 435 686 B1

**Description**

BACKGROUND

1. TECHNICAL FIELD

The present invention relates to an operation support apparatus, an operation support method, and an operation support program.

2. RELATED ART

Patent Document 1 describes that "a method for updating an ion exchange membrane according to the present embodiment includes a process of sandwiching the ion exchange membrane between an anode side gasket and a cathode side gasket, ..." (Paragraph 0052).

PRIOR ART DOCUMENT

PATENT DOCUMENT

Patent Document 1: Japanese Patent Application Publication No. 2019-19408 WO 2019/059321 A1 and EP3690792 A1 provide a planning device, a method of creating operation planning, and a program, the planning device being provided with: an electric charge prediction unit which predicts a future trend of electric charges by using an electric charge prediction model which predicts a trend of the electric charges in a target period on the basis of a value of a first factor available before the target period; and an operation planning creating unit which creates an operation plan of the electrolysis device in a future first period on the basis of the predicted future trend of the electric charges.

JP 2014 070258 A provides an electrolyzed water production apparatus provided with: an electrolytic cell that electrolyzes raw water to generate electrolysis product and discharges the electrolysis product from an outlet; a control section that controls an operation of the electrolytic cell; and a mixing section that is connected to the electrolytic cell and mixes the electrolysis product obtained in the electrolytic cell with dilution water to make it into electrolyzed water, and is characterized in that the electrolytic cell is pre-loaded inside with the raw water of a predetermined amount from a supply port of the raw water which is formed in the electrolytic cell, and is detachably connected to the mixing section in a closed state being unable to be added with a new raw water from the supply port, and the control section divides the duration time necessary to electrolyze the pre-loaded raw water into each predetermined unit duration time and sets the number of times necessary to electrolyze the pre-loaded raw water into a plural of times, and electrifies an electric current of fixed current value to the electrolytic cell for each unit duration time.

JP 2002 366023 A teaches that, in a processing part, a secular deterioration prediction part obtains the predictive date of secular deterioration by comparing the obtained time-series data of the constitution site of a riding simulation device with past fault history data. A maintenance time prediction part obtains the predictive date of a maintenance time by comparing the accumulated using time of the device with maintenance adaptation reference.

TECHNICAL PROBLEM

For an electrolysis apparatus to stably and continuously produce a product with a required quality, it is preferable that a quality of brine, update timing of update of a target object in the electrolysis apparatus, and an operating condition of the electrolysis apparatus should be appropriately controlled. In addition, in order to reduce an amount of $CO_2$ (carbon dioxide) generated with running of the electrolysis apparatus, it is preferable that the quality of the brine, timing of at least one of update, revamp, or refurbishment of the target object in the electrolysis apparatus, and the operating condition of the electrolysis apparatus should be appropriately controlled. In addition, it is preferable that a lifespan of the target object in the electrolysis apparatus should be appropriately managed.

GENERAL DISCLOSURE

A first aspect of the present invention provides an operation support apparatus. The operation support apparatus includes: a prediction unit which predicts a maintenance recommended time at which a target object in an electrolysis apparatus is put into a maintenance recommended state; and a provision unit which provides information for recommending that maintenance of the target object should be performed at a first maintenance time.

The operation support apparatus may further include a determination unit which determines a temporal relation between a predetermined first maintenance time at which the target object can be maintained and the maintenance recommended time as well as a temporal relation between a predetermined second maintenance time at which the target object can be maintained and the maintenance recommended time, where the second maintenance time comes after the first maintenance time. When it is determined by the determination unit that the maintenance recommended time comes after the first maintenance time and comes before the second maintenance time, the provision unit may provide the information for recommending that the maintenance of the target object should be performed at the first maintenance time.

In any of the operation support apparatuses described above, the maintenance recommended state may be predetermined. The prediction unit may predict a first maintenance recommended time at which the target object is put into the maintenance recommended state, as the maintenance recommended time.

Any of the operation support apparatuses described above may further include a state acquisition unit which acquires a state of the target object. In any of the operation support apparatuses described above, the prediction unit may further predict a second maintenance recommended time at which the target object is put into the maintenance recommended state, as the maintenance recommended time, on a basis of the state of the target object acquired by the state acquisition unit.

The state acquisition unit may acquire the state of the target object at the first maintenance time.

When it is determined by the determination unit that the first maintenance recommended time comes after the first maintenance time and before the second maintenance time, the state acquisition unit may measure the state of the target object at the first maintenance time, and the prediction unit may predict the second maintenance recommended time at the first maintenance time.

In any of the operation support apparatuses described above, when the determination unit determines that the first maintenance recommended time comes after the second maintenance time and determines that the second maintenance recommended time comes after the first maintenance time and before the second maintenance time, the provision unit may provide the information for recommending that the maintenance of the target object should be performed at the first maintenance time.

In any of the operation support apparatuses described above, when the determination unit determines that the first maintenance recommended time comes after the second maintenance time and determines that the second maintenance recommended time comes before the first maintenance time, the state acquisition unit may acquire the state of the target object at the first maintenance time.

In any of the operation support apparatuses described above, the electrolysis apparatus may have an electrolyzer. The electrolyzer may include an ion exchange membrane as well as an anode chamber and a cathode chamber separated by the ion exchange membrane. A first aqueous solution, which is an aqueous solution of an alkali metal chloride, may be induced into the anode chamber. The electrolysis apparatus may be provided with a detection unit which detects at least one of an ion of an alkali earth metal, an aluminum ion, a nickel ion, an iron ion, an iodine ion, silicon, a sulfate ion, a suspended matter, or an organic matter contained in the first aqueous solution. When the detection unit detects at least one of an ion of an alkali earth metal, an aluminum ion, a nickel ion, an iron ion, an iodine ion, silicon, a sulfate ion, a suspended matter, or an organic matter with a concentration equal to or higher than a predetermined concentration in the first aqueous solution, the determination unit may determine that a chemical agent which precipitates at least one of the suspended matter or the organic matter is induced into or increased in the first aqueous solution.

The electrolysis apparatus may be provided with a filter and a first pressure sensor which measures pressure of the first aqueous solution. At least part of the suspended matter contained in the first aqueous solution may be removed by passing through the filter. The first pressure sensor may measure a first pressure of the first aqueous solution which has not yet passed through the filter and a second pressure of the first aqueous solution which has passed through the filter. The determination unit may determine whether a difference between the first pressure and the second pressure is above a predetermined threshold difference. When the determination unit determines that the difference is above the threshold difference, the provision unit may provide information for recommending update of the filter.

Any electrolysis apparatus described above may be provided with an ion exchange resin which removes at least part of an alkali earth metal contained in the first aqueous solution. When it is determined by the determination unit that a back washing speed of the ion exchange resin is above a predetermined threshold back washing speed, the provision unit may provide information for recommending update of the ion exchange resin.

Any electrolysis apparatus described above may be provided with an ion exchange resin which removes at least part of an alkali earth metal contained in the first aqueous solution. When it is determined by the determination unit that a regeneration frequency of the ion exchange resin is shorter than a predetermined time period, the provision unit may provide information indicating that update of the ion exchange resin is recommended.

In any of the operation support apparatuses described above, a second aqueous solution, which is an aqueous solution of an alkali metal hydroxide, may be induced into the cathode chamber. The electrolysis apparatus may be provided with: first induction piping which is connected to the anode chamber and through which the first aqueous solution passes; and second induction piping which is connected to the cathode chamber and through which the second aqueous solution passes. The electrolysis apparatus may be provided with a flow rate sensor which measures at least one of a flow rate of the first aqueous solution passing through the first induction piping or a flow rate of the second aqueous solution passing through the second induction piping. The state acquisition unit may acquire at least one of the flow rate of the first aqueous solution or the flow rate of the second aqueous solution measured by the flow rate sensor. The determination unit may determine whether the flow rate of the first aqueous solution or the flow rate of the second aqueous solution is within a predetermined flow rate range, and when the determination unit determines that the flow rate of the first aqueous solution or the flow rate of the second aqueous solution is not within the flow rate range, the provision unit may provide information for recommending the maintenance of the target object.

The first induction piping and the second induction piping may be provided with a first valve which controls the flow rate of the first aqueous solution and the flow rate of the second aqueous solution. When it is determined by the determination unit that the flow rate of the first aqueous solution or the flow rate of the second aqueous solution is not within the flow rate range, the determination unit may determine whether the flow rate of the first aqueous solution and the flow rate of the second aqueous solution can be controlled to be within the flow rate range by controlling the first valve. When it is determined by the determination unit that the flow rate of the first aqueous solution and the flow rate of the second aqueous solution cannot be controlled to be within the flow rate range, the provision unit may provide information for recommending repair or replacement of the first induction piping, the second induction piping, and the first valve.

Any electrolysis apparatus described above may be provided with: a temperature sensor which measures at least one of temperature of the first aqueous solution or temperature of the second aqueous solution; a pH sensor which measures at least one of a first pH of the first aqueous solution or a second pH of the second aqueous solution; or a second pressure sensor which measures at least one of pressure of a chlorine gas in the anode chamber or pressure of a hydrogen gas in the cathode chamber. The state acquisition unit may acquire: at least one of the temperature of the first aqueous solution or the temperature of the second aqueous solution measured by the temperature sensor; at least one of the first pH of the first aqueous solution or the second pH of the second aqueous solution measured by the pH sensor; or at least one of the pressure of the chlorine gas or the pressure of the hydrogen gas measured by the second pressure sensor. When the determination unit: determines that the temperature of the first aqueous solution or the temperature of the second aqueous solution measured by the temperature sensor is above a predetermined threshold temperature; determines that the first pH of the first aqueous solution measured by the pH sensor is below a predetermined threshold first pH or determines that the second pH of the second aqueous solution is above a predetermined threshold second pH; or determines that the pressure of the chlorine gas or the pressure of the hydrogen gas measured by the second pressure sensor is above a predetermined threshold pressure, the provision unit may provide the information for recommending the maintenance of the target object.

Any electrolysis apparatus described above may be provided with: third induction piping which is connected to the first induction piping and through which a third aqueous solution, which is an acidic aqueous solution, passes; a second valve which controls a flow rate of the third aqueous solution; fourth induction piping which is connected to the second induction piping and through which a fourth aqueous solution, which is an aqueous solution of an alkali metal hydroxide, passes; and a third valve which controls a flow rate of the fourth aqueous solution. The first induction piping and the second induction piping may be provided with a first valve which controls the flow rate of the first aqueous solution and the flow rate of the second aqueous solution. When it is determined by the determination unit that the temperature of the first aqueous solution or the temperature of the second aqueous solution is above the threshold temperature, the determination unit determines whether the temperature of the first aqueous solution and the temperature of the second aqueous solution can be controlled to be equal to or lower than the threshold temperature by controlling the third valve, and when the determination unit determines that the temperature of the first aqueous solution and the temperature of the second aqueous solution cannot be controlled to be equal to or lower than the threshold temperature, the provision unit may provide information for recommending repair or replacement of the fourth induction piping and the third valve. When the determination unit determines that the first pH of the first aqueous solution is below a predetermined threshold first pH or determines that the second pH of the second aqueous solution is above a predetermined threshold second pH, the determination unit determines whether the first pH of the first aqueous solution can be controlled to be equal to or higher than the threshold first pH and whether the second pH of the second aqueous solution can be controlled to be equal to or lower than the threshold second pH by controlling the second valve, and when the determination unit determines that the first pH of the first aqueous solution can be controlled to be equal to or higher than the threshold first pH and that the second pH of the second aqueous solution cannot be controlled to be equal to or lower than the threshold second pH, the provision unit may provide information for recommending repair or replacement of the third induction piping and the second valve. When it is determined by the determination unit that the pressure of the chlorine gas or the pressure of the hydrogen gas measured by the second pressure sensor is above a predetermined threshold pressure, the determination unit determines whether the pressure of the chlorine gas and the pressure of the hydrogen gas can be controlled to be equal to or lower than the threshold pressure by controlling the first valve, and when the determination unit determines that the pressure of the chlorine gas and the pressure of the hydrogen gas cannot be controlled to be equal to or lower than the threshold pressure, the provision unit may provide information for recommending maintenance of the anode chamber and the cathode chamber.

In any of the operation support apparatuses described above, the state acquisition unit may acquire current efficiency of the electrolyzer. The prediction unit may predict the current efficiency of the electrolyzer at the second maintenance time on a basis of the current efficiency of the electrolyzer acquired by the state acquisition unit. The determination unit may determine whether the current efficiency of the electrolyzer predicted by the prediction unit becomes below a predetermined threshold current efficiency. When it is determined by the determination unit that the current efficiency of the electrolyzer becomes below the threshold current efficiency, the provision unit may provide information for recommending that the ion exchange membrane should be updated at the first maintenance time.

In any of the electrolysis apparatuses described above, an anode may be arranged in the anode chamber. A cathode may be arranged in the cathode chamber. The state acquisition unit may acquire voltage of the electrolyzer. The prediction unit may predict the voltage of the electrolyzer at the second maintenance time on a basis of the voltage of the electrolyzer acquired by the state acquisition unit. The determination unit may determine whether the voltage of the electrolyzer predicted by the prediction unit exceeds a predetermined threshold voltage. When it is determined by the determination unit that the voltage of the electrolyzer exceeds the threshold voltage, the provision unit may provide information for recommending that at least one of the ion exchange membrane, the anode, or the cathode should be updated at the first maintenance time.

The state acquisition unit may acquire current efficiency of the electrolyzer or voltage of the electrolyzer. The determination unit may calculate an amount of carbon dioxide generated with running of the electrolysis apparatus on a basis of the current efficiency of the electrolyzer acquired by the state acquisition unit and a relationship between the current efficiency of the electrolyzer and the amount of the carbon dioxide generated with the running of the electrolysis apparatus, or calculates an amount of carbon dioxide generated with running of the electrolysis apparatus on a basis of the voltage of the electrolyzer acquired by the state acquisition unit and a relationship between the voltage of the electrolyzer and the amount of the carbon dioxide generated with the running of the electrolysis apparatus. The provision unit may provide the amount of the carbon dioxide calculated by the determination unit.

The state acquisition unit may acquire current efficiency of the electrolyzer. The prediction unit may predict the second maintenance recommended time on a basis of the current efficiency.

The state acquisition unit may acquire voltage of the electrolyzer. The prediction unit may predict the second maintenance recommended time on a basis of the voltage.

The state acquisition unit may acquire an impurity concentration in a product produced by the electrolyzer on a basis of the state of the target object. The prediction unit may predict the second maintenance recommended time on a basis of the impurity concentration in the product produced by the electrolyzer.

The state acquisition unit may acquire temperature of the fourth aqueous solution measured by the temperature sensor. The prediction unit may predict the second maintenance recommended time on a basis of the temperature of the fourth aqueous solution.

The state acquisition unit may acquire at least one of the first pH or the second pH measured by the pH sensor. The prediction unit may predict the second maintenance recommended time on a basis of the first pH or the second pH.

The state acquisition unit may acquire a kind of a raw salt for producing the first aqueous solution. The determination unit may calculate the amount of the carbon dioxide generated with the running of the electrolysis apparatus on a basis of the kind of the raw salt acquired by the state acquisition unit and a relationship between the kind of the raw salt and the amount of the carbon dioxide generated by the electrolysis apparatus. The provision unit may provide the amount of the carbon dioxide calculated by the determination unit.

The state acquisition unit may acquire an induced amount of the chemical agent into the first aqueous solution or a running status of a removal apparatus which removes an impurity that may degrade ion exchange performance of the ion exchange membrane. The determination unit may calculate the amount of the carbon dioxide generated with the running of the electrolysis apparatus on a basis of the induced amount acquired by the state acquisition unit and the relationship between the induced amount and the amount of the carbon dioxide or on a basis of the running status of the removal apparatus acquired by the state acquisition unit and a relationship between the running status of the removal apparatus and the amount of the carbon dioxide. The provision unit may provide the amount of the carbon dioxide calculated by the determination unit.

Any of the operation support apparatuses described above may further include a first generated amount learning unit which produces a first generated amount inference model that outputs a first inferred amount of the carbon dioxide generated with the running of the electrolysis apparatus based on the current efficiency and the amount of the carbon dioxide, by performing machine learning of the relationship between the current efficiency and the amount of the carbon dioxide or which produces a second generated amount inference model that outputs a second inferred amount of the carbon dioxide generated with the running of the electrolysis apparatus based on the voltage and the amount of the carbon dioxide, by performing machine learning of the relationship between the voltage and the amount of the carbon dioxide.

Any of the operation support apparatuses described above may further include a second generated amount learning unit which produces a second generated amount inference model that outputs a second inferred amount of the carbon dioxide generated with the running of the electrolysis apparatus based on the kind of the raw salt and the amount of the carbon dioxide, by performing machine learning of the relationship between the kind of the raw salt and the amount of the carbon dioxide.

Any of the operation support apparatuses described above may further include a third generated amount learning unit which produces a third generated amount inference model that outputs a third inferred amount of the carbon dioxide generated with the running of the electrolysis apparatus based on the induced amount and the amount of the carbon dioxide or based on the running status of the removal apparatus and the amount of the carbon dioxide, by performing machine learning of the relationship between the induced amount and the amount of the carbon dioxide or the relationship between the running status of the removal apparatus and the amount of the carbon dioxide.

Any of the operation support apparatuses described above may further include a fourth generated amount learning unit which produces a fourth generated amount inference model that outputs a fourth inferred amount of the carbon dioxide generated with the running of the electrolysis apparatus based on a time period and a scale regarding update of the electrolysis apparatus and an amount of carbon dioxide, by performing machine learning of a relationship between the time period and the scale regarding the update of the electrolysis apparatus, and the amount of the carbon dioxide.

A second aspect of the present invention provides an operation support method. The operation support method includes: first predicting, by a prediction unit, a maintenance recommended time at which a target object in an electrolysis apparatus is put into a maintenance recommended state; and first providing, by a provision unit, information for recommending that maintenance of the target object should be performed at a first maintenance time.

The operation support method may further include first determining, by a determination unit, a temporal relation between a predetermined first maintenance time at which the target object can be maintained and the maintenance recommended time as well as a temporal relation between a predetermined second maintenance time at which the target object can be maintained and the maintenance recommended time, wherein the second maintenance time comes after the first maintenance time. Performing the first providing may be providing, by the provision unit, the information for recommending that the maintenance of the target object should be performed at the first maintenance time, when it is determined, in performing the first determining, that the maintenance recommended time comes after the first maintenance time and comes before the second maintenance time.

In any of the operation support methods described above, the maintenance recommended state may be predetermined. Performing the first predicting may be predicting, by the prediction unit, a first maintenance recommended time at which the target object is put into the maintenance recommended state, as the maintenance recommended time.

Any of the operation support methods described above may further include: first acquiring, by a state acquisition unit, a state of the target object at the first maintenance time; and second predicting further, by the prediction unit, a second maintenance recommended time at which the target object is put into the maintenance recommended state, as the maintenance recommended time, on a basis of the state of the target object acquired in the first acquiring the state.

Any of the operation support methods described above may further include: second determining, by the determination unit, a temporal relation between the first maintenance time and the second maintenance recommended time as well as a temporal relation between the second maintenance time and the second maintenance recommended time; and second providing, by the provision unit, the information for recommending that the maintenance of the target object should be performed at the first maintenance time, when it is determined, in performing the second determining, that the second maintenance recommended time comes after the first maintenance time and before the second maintenance time.

Any of the operation support methods described above may further include: second acquiring, by the state acquisition unit, the state of the target object while the electrolysis apparatus is running; and third predicting further, by the prediction unit, a second maintenance recommended time at which the target object is put into the maintenance recommended state, as the maintenance recommended time, on a basis of the state of the target object acquired in the second acquiring the state.

Any of the operation support methods described above may further include: third determining, by the determination unit, a temporal relation between the second maintenance time and the first maintenance recommended time as well as a temporal relation between the second maintenance time and the second maintenance recommended time; and second providing, by the provision unit, the information for recommending that the maintenance of the target object should be performed at the first maintenance time, when it is determined, in performing the third determining, that the first maintenance recommended time comes after the second maintenance time and the second maintenance recommended time comes before the second maintenance time.

The electrolysis apparatus may have an electrolyzer. The electrolyzer may include an ion exchange membrane as well as an anode chamber and a cathode chamber separated by the ion exchange membrane. A first aqueous solution, which is an aqueous solution of an alkali metal chloride, may be induced into the anode chamber. A second aqueous solution, which is an aqueous solution of an alkali metal hydroxide, may be induced into the cathode chamber. The electrolysis apparatus may be provided with: first induction piping which is connected to the anode chamber and through which the first aqueous solution passes; second induction piping which is connected to the cathode chamber and through which the second aqueous solution passes; third induction piping which is connected to the first induction piping and through which a third aqueous solution, which is an acidic aqueous solution, passes; a second valve which controls a flow rate of the third aqueous solution; fourth induction piping which is connected to the second induction piping and through which a fourth aqueous solution, which is an aqueous solution of an alkali metal hydroxide, passes; and a third valve which controls a flow rate of the fourth aqueous solution. The electrolysis apparatus may be provided with a detection unit which detects at least one of an ion of an alkali earth metal, an aluminum ion, a nickel ion, an iron ion, an iodine ion, silicon, a sulfate ion, a suspended matter, or an organic matter contained in the first aqueous solution. The first induction piping and the second induction piping may be provided with a first valve which controls the flow rate of the first aqueous solution and the flow rate of the second aqueous solution. The operation support method may further include: fourth determining, by the determination unit, a temporal relation between the second maintenance time and the first maintenance recommended time as well as a temporal relation between the second maintenance time and the second maintenance recommended time; and controlling, by a control unit, the first valve. When, in performing the fourth determining, it is determined that the first maintenance recommended time comes after the second maintenance time, it is determined that the second maintenance recommended time comes before the first maintenance time, and a concentration of the suspended matter or the organic matter detected by the detection unit is equal to or higher than a predetermined concentration, the control unit may delay the second maintenance recommended time until the first maintenance time by controlling at least one of the first valve, the second valve, or the third valve and changing an added amount of a chemical agent in performing the controlling.

A third aspect of the present invention provides an operation support program. The operation support program causes a computer to perform an operation support method.

The summary clause does not necessarily describe all necessary features of the embodiments of the present invention. The present invention may also be a sub-combination of the features described above.

BRIEF DESCRIPTION OF THE DRAWINGS

Fig. 1 illustrates an example of an electrolysis apparatus 200 according to one embodiment of the present invention.

Fig. 2 illustrates an example of an electrolysis apparatus 200 according to one embodiment of the present invention.

Fig. 3 illustrates an example of details of a single electrolysis cell 91 in Fig. 2.

Fig. 4 is an enlarged view of a vicinity of an ion exchange membrane 84 in the electrolysis cell 91 shown in Fig. 3.

Fig. 5 illustrates an example of a block diagram of an operation support apparatus 100 according to one embodiment of the present invention.

Fig. 6 illustrates examples of a maintenance time and a maintenance recommended time of an electrolysis apparatus 200.

Fig. 7 illustrates other examples of a maintenance time and a maintenance recommended time of an electrolysis apparatus 200.

Fig. 8 illustrates other examples of a maintenance time and a maintenance recommended time of an electrolysis apparatus 200.

Fig. 9 illustrates other examples of a maintenance time and a maintenance recommended time of an electrolysis apparatus 200.

Fig. 10 illustrates other examples of a maintenance time and a maintenance recommended time of an electrolysis apparatus 200.

Fig. 11 illustrates other examples of a maintenance time and a maintenance recommended time of an electrolysis apparatus 200.

Fig. 12 illustrates another example of an electrolysis apparatus 200 according to one embodiment of the present invention.

Fig. 13 illustrates another example of a block diagram of an operation support apparatus 100 according to one embodiment of the present invention.

Fig. 14 illustrates an example of a first generated amount inference model 140.

Fig. 15 illustrates an example of a second generated amount inference model 142.

Fig. 16 illustrates an example of a third generated amount inference model 143.

Fig. 17 illustrates an example of a fourth generated amount inference model 144.

Fig. 18 is a first flowchart including an example of an operation support method according to one embodiment of the present invention.

Fig. 19 is a second flowchart including an example of an operation support method according to one embodiment of the present invention.

Fig. 20 is a third flowchart including an example of an operation support method according to one embodiment of the present invention.

Fig. 21 is a fourth flowchart including an example of an operation support method according to one embodiment of the present invention.

Fig. 22 illustrates an example of a computer 2200 in which an operation support apparatus 100 according to one embodiment of the present invention may be entirely or partially embodied.

DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

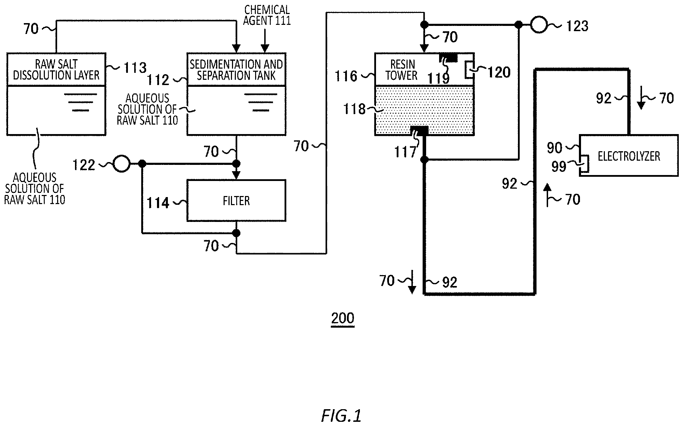

Fig. 1 illustrates an example of an electrolysis apparatus 200 according to one embodiment of the present invention. The electrolysis apparatus 200 in the present example includes an electrolyzer 90. The electrolysis apparatus 200 in the present example is provided with a raw salt dissolution layer 113, a sedimentation and separation tank 112, a filter 114, a first pressure sensor 122, a resin tower 116, a pressure sensor 123, first induction piping 92, and a detection unit 99. A raw salt 110 is dissolved in the raw salt dissolution layer 113. In the sedimentation and separation tank 112, a chemical agent 111 which precipitates an impurity that may degrade ion exchange performance of an ion exchange membrane 84 (to be described later) is charged into an aqueous solution of the raw salt 110. The impurity is referred to as an impurity Im. The impurity Im will be described later. The chemical agent 111 is, for example, $Mg(OH)_2$ (magnesium hydroxide) or $CaCO_3$ (calcium carbonate). The first induction piping 92 is connected to the electrolyzer 90.

The raw salt 110 is an alkali metal chloride. The raw salt 110 is, for example, NaCl (sodium chloride) or KCl (potassium chloride). The aqueous solution of the raw salt 110 is an aqueous solution of an alkali metal chloride. The aqueous solution is referred to as a first aqueous solution 70.

The raw salt 110 may contain an element of an alkali earth metal. The element of the alkali earth metal which may be contained in the raw salt 110 is, for example, Ca (calcium), Sr (strontium), Ba (barium), or Mg (magnesium). The sedimentation and separation tank 112 separates the aqueous solution of the raw salt 110 and the impurity Im by precipitating the impurity Im which may degrade the ion exchange performance of the ion exchange membrane 84 (to be described later). The impurity Im contains a so-called suspended solid (SS) or the like. In the present example, the first aqueous solution 70 from which the impurity Im has been separated is induced into the filter 114.

The first aqueous solution 70 passes through the filter 114. At least part of the impurity Im remaining in the first aqueous solution 70 is removed from the first aqueous solution 70 by passing through the filter 114. The filter 114 is, for example, a precoat-type pleated filter. In the present example, the first aqueous solution 70 which has passed through the filter 114 is induced into the resin tower 116.

The first pressure sensor 122 measures pressure of the first aqueous solution 70. The first pressure sensor 122 may measure the pressure of the first aqueous solution 70 which has not yet passed through the filter 114 and the pressure of the first aqueous solution 70 which has passed through the filter 114.

In the present example, the resin tower 116 is provided with an ion exchange resin 118, an impurity sensor 117, a flow rate sensor 119, and an image sensor 120. The impurity sensor 117 detects at least one of an ion of the alkali earth metal, an aluminum ion ($Al^{3+}$), a nickel ion ($Ni^{2+}$), iron ions ($Fe^{2+}$, $Fe^{3+}$), an iodine ion ($I^-$), silicon (Si), a sulfate ion ($SO_4^{2-}$), a suspended matter, or an organic matter. The ion of the alkali earth metal is, for example, at least one of a calcium ion ($Ca^{2+}$), a magnesium ion ($Mg^{2+}$), a strontium ion ($Sr^{2+}$), or a barium ion ($Ba^{2+}$). The suspended matter and the organic matter are, for example, the suspended solid (SS) and a total organic carbon (TOC). The impurity Im described above may refer to at least one of the suspended solid (SS) or the total organic carbon (TOC). The flow rate sensor 119 and the pressure sensor 123 will be described later.

The first aqueous solution 70 from which the at least part of the impurity Im has been removed by the filter 114 passes through the ion exchange resin 118. The ion exchange resin 118 removes at least part of the impurity Im contained in the first aqueous solution 70. In the present example, the impurity Im contained in the first aqueous solution 70 is removed by the filter 114, and is further removed by the ion exchange resin 118. It should be noted that the impurity sensor 117 and the image sensor 120 will be described later.

The electrolyzer 90 is provided with a detection unit 99. The detection unit 99 will be described later.

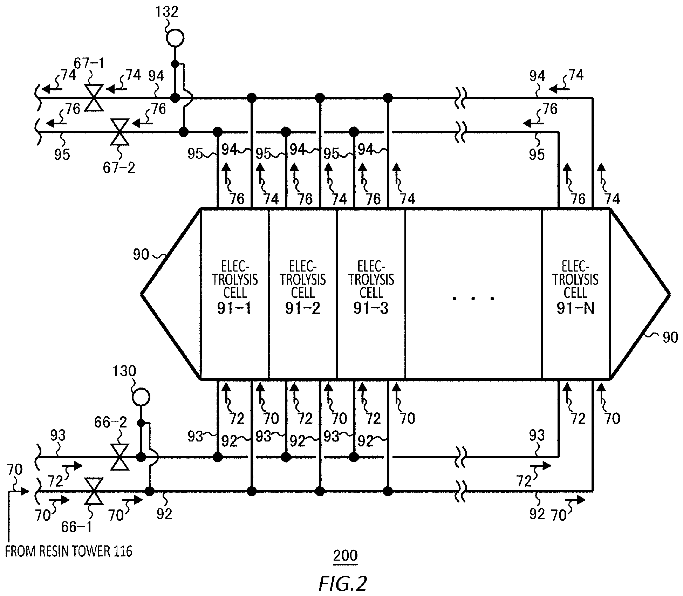

Fig. 2 illustrates an example of an electrolysis apparatus 200 according to one embodiment of the present invention. In Fig. 2, components other than the electrolyzer 90 and the first induction piping 92 shown in Fig. 1 are omitted. The electrolysis apparatus 200 in the present example is provided with first induction piping 92, second induction piping 93, first discharge piping 94, and second discharge piping 95.

An electrolyzer 90 is a tank which electrolyzes an electrolysis solution. In the present example, the electrolyzer 90 electrolyzes a first aqueous solution 70. When the first aqueous solution 70 is a NaCl (sodium chloride) aqueous solution, the electrolyzer 90 produces $Cl_2$ (chlorine), NaOH (sodium hydroxide), and $H_2$ (hydrogen) by electrolyzing the NaCl (sodium chloride) aqueous solution. The electrolyzer 90 may include a plurality of electrolysis cells 91 (electrolysis cells 91-1 to 91-N, where N is an integer equal to or greater than 2). N is, for example, 50.

In the present example, the first induction piping 92 and the second induction piping 93 are connected to each of the electrolysis cells 91-1 to 91-N. The first aqueous solution 70 is induced into each of the electrolysis cells 91-1 to 91-N. The first aqueous solution 70 may be induced into each of the electrolysis cells 91-1 to 91-N after passing through the first induction piping 92.

A second aqueous solution 72 is induced into each of the electrolysis cells 91-1 to 91-N. The second aqueous solution 72 may be induced into each of the electrolysis cells 91-1 to 91-N after passing through the second induction piping 93. The second aqueous solution 72 is an aqueous solution of an alkali metal hydroxide. The second aqueous solution 72 is, for example, a NaOH (sodium hydroxide) aqueous solution.

In the present example, the first discharge piping 94 and the second discharge piping 95 are connected to each of the electrolysis cells 91-1 to 91-N. A fourth aqueous solution 76 and gas 78 (to be described later) are discharged from each of the electrolysis cells 91-1 to 91-N. The fourth aqueous solution 76 and the gas 78 (to be described later) may be discharged to an outside of the electrolysis apparatus 200 after passing through the second discharge piping 95. The fourth aqueous solution 76 is an aqueous solution of an alkali metal hydroxide. When the second aqueous solution 72 is a NaOH (sodium hydroxide) aqueous solution, the fourth aqueous solution 76 is a NaOH (sodium hydroxide) aqueous solution. The gas 78 (to be described later) may be $H_2$ (hydrogen).

Liquid 74 and gas 77 (to be described later) are discharged from each of the electrolysis cells 91-1 to 91-N. The liquid 74 and the gas 77 (to be described later) may be discharged to the outside of the electrolysis apparatus 200 after passing through the first discharge piping 94. The liquid 74 is an aqueous solution of an alkali metal chloride. When the first aqueous solution 70 is a NaCl (sodium chloride) aqueous solution, the liquid 74 is a NaCl (sodium chloride) aqueous solution. The gas 77 (to be described later) may be $Cl_2$ (chlorine).

The electrolysis apparatus 200 in the present example is provided with a plurality of first valves 66 and a plurality of first valves 67. In the present example, a first valve 66-1 and a first valve 66-2 are respectively provided in the first induction piping 92 and the second induction piping 93. The first valve 66-1 and the first valve 66-2 respectively control flow rates of the first aqueous solution 70 and the second aqueous solution 72. In the present example, a first valve 67-1 and a first valve 67-2 are respectively provided in the first discharge piping 94 and the second discharge piping 95. The first valve 67-1 and the first valve 67-2 respectively control flow rates of the liquid 74 and the fourth aqueous solution 76. The first valves 66 and the first valves 67 are, for example, valves.

The first valve 66-1 may control a flow rate per unit time of the first aqueous solution 70 flowing through the first induction piping 92 or an integrated value of the flow rate over a predetermined time. The same applies to the first valve 66-2, the first valve 67-1, and the first valve 67-2.

The electrolysis apparatus 200 in the present example is provided with a flow rate sensor 130. The flow rate sensor 130 measures at least one of the flow rate of the first aqueous solution 70 passing through the first induction piping 92 or the flow rate of the second aqueous solution 72 passing through the second induction piping 93. The flow rate sensor 130 may be provided in the first induction piping 92 and the second induction piping 93.

The electrolysis apparatus 200 in the present example is provided with a second pressure sensor 132. The second pressure sensor 132 measures at least one of pressure of a chlorine gas ($Cl_2$) in an anode chamber 79 (to be described later) or pressure of a hydrogen gas ($H_2$) in a cathode chamber 98 (to be described later). The second pressure sensor 132 may be provided in the first discharge piping 94 and the second discharge piping 95.

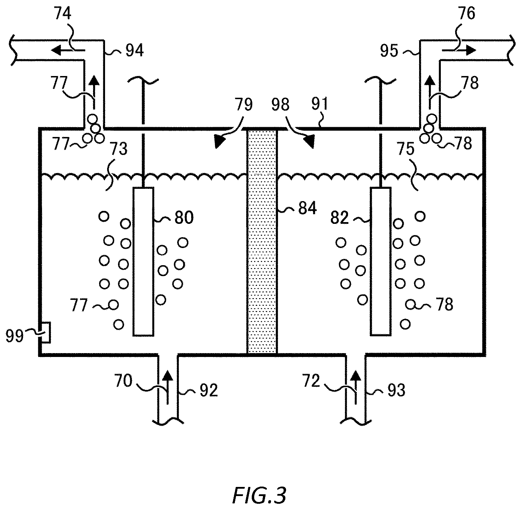

Fig. 3 illustrates an example of details of a single electrolysis cell 91 in Fig. 2. The electrolyzer 90 has the anode chamber 79, an anode 80, the cathode chamber 98, a cathode 82, and an ion exchange membrane 84. In the present example, the single electrolysis cell 91 has the anode chamber 79, the anode 80, the cathode chamber 98, the cathode 82, and the ion exchange membrane 84. The anode chamber 79 and the cathode chamber 98 are provided inside the electrolysis cell 91. The anode chamber 79 and the cathode chamber 98 are separated by the ion exchange membrane 84. The anode 80 is arranged in the anode chamber 79. The cathode 82 is arranged in the cathode chamber 98.

The first induction piping 92 and the first discharge piping 94 are connected to the anode chamber 79. The second induction piping 93 and the second discharge piping 95 are connected to the cathode chamber 98. The first aqueous solution 70 is induced into the anode chamber 79. The second aqueous solution 72 is induced into the cathode chamber 98.

A detection unit 99 (see this figure and Fig. 1) may be provided in the anode chamber 79. The detection unit 99 detects at least one of an ion of an alkali earth metal, an aluminum ion ($Al^{3+}$), a nickel ion ($Ni^{2+}$), iron ions ($Fe^{2+}$, $Fe^{3+}$), an iodine ion ($I^-$), silicon ($Si$), a sulfate ion ($SO_4^{2-}$), a suspended matter, or an organic matter contained in the first aqueous solution 70. Objects to be detected by the detection unit 99 described above are referred to as objects to be detected Db.

The ion exchange membrane 84 is a membranous substance preventing passage of an ion with the same sign as an ion arranged in the ion exchange membrane 84 and allowing passage of only an ion with an opposite sign. When the first aqueous solution 70 is a NaCl (sodium chloride) aqueous solution, the ion exchange membrane 84 allows passage of $Na^+$ (sodium ion) and prevents passage of $Cl^-$ (chloride ion).

The anode 80 and the cathode 82 may be respectively maintained at predetermined positive and negative potentials. The first aqueous solution 70 induced into the anode chamber 79 and the second aqueous solution 72 induced into the cathode chamber 98 are electrolyzed due to a potential difference between the anode 80 and the cathode 82. The anode 80 undergoes the following chemical reaction.

(Chemical Formula 1)       $2Cl^- \rightarrow Cl_2 + 2e^-$

When the first aqueous solution 70 is a NaCl (sodium chloride) aqueous solution, NaCl (sodium chloride) is ionized into $Na^+$ (sodium ion) and $Cl^-$ (chloride ion). In the anode 80, a $Cl_2$ (chlorine) gas is produced by a chemical reaction shown in Chemical Formula 1. The gas 77 (the $Cl_2$ (chlorine) gas) and the liquid 74 may be discharged from the anode chamber 79. The $Na^+$ (sodium ion) moves from the anode chamber 79 to the cathode chamber 98 via the ion exchange membrane 84 due to an attractive force from the cathode 82.

Liquid 73 may be retained in the anode chamber 79. The liquid 73 is an aqueous solution of an alkali metal chloride. When the first aqueous solution 70 is a NaCl (sodium chloride) aqueous solution, the liquid 73 is a NaCl (sodium chloride) aqueous solution. A $Na^+$ (sodium ion) concentration and a $Cl^-$ (chloride ion) concentration of the liquid 73 may be lower than a $Na^+$ (sodium ion) concentration and a $Cl^-$ (chloride ion) concentration of the first aqueous solution 70.

The cathode 82 undergoes the following chemical reaction.

(Chemical Formula 2)       $2H_2O + 2e^- \rightarrow H_2 + 2OH^-$

When the second aqueous solution 72 is a NaOH (sodium hydroxide) aqueous solution, NaOH (sodium hydroxide) is ionized into $Na^+$ (sodium ion) and $OH^-$ (hydroxide ion). In the cathode 82, a $H_2$ (hydrogen) gas and $OH^-$ (hydroxide ion) are produced by a chemical reaction shown in Chemical Formula 2. The gas 78 (the $H_2$ (hydrogen) gas) and the fourth aqueous solution 76 may be discharged from the cathode chamber 98.

Liquid 75 may be retained in the cathode chamber 98. When the second aqueous solution 72 is a NaOH (sodium hydroxide) aqueous solution, the liquid 75 is a NaOH (sodium hydroxide) aqueous solution. When the second aqueous solution 72 is a NaOH (sodium hydroxide) aqueous solution, the cathode chamber 98 retains the liquid 75 in which the $OH^-$ (hydroxide ion) produced by the chemical reaction shown in Chemical Formula 2 and the $Na^+$ (sodium ion) moved from the anode chamber 79 are dissolved.

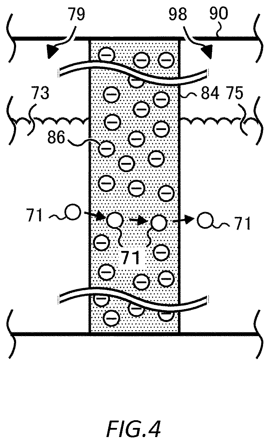

Fig. 4 is an enlarged view of a vicinity of the ion exchange membrane 84 in the electrolysis cell 91 shown in Fig. 3. An anion group 86 is fixed to the ion exchange membrane 84 in the present example. Since an anion is repelled by the anion group 86, it hardly passes through the ion exchange membrane 84. When the first aqueous solution 70 (see Fig. 3) is a NaCl (sodium chloride) aqueous solution, the anion is $Cl^-$ (chloride ion). Since a cation 71 is not repelled by the anion group 86, it can pass through the ion exchange membrane 84. When the first aqueous solution 70 is a NaCl (sodium chloride) aqueous solution, the cation 71 is $Na^+$ (sodium ion).

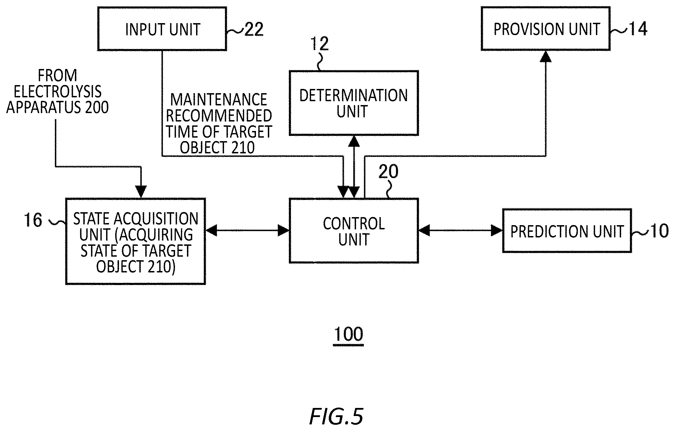

Fig. 5 illustrates an example of a block diagram of an operation support apparatus 100 according to one embodiment of the present invention. The operation support apparatus 100 supports operation of an electrolysis apparatus 200 (see Fig. 1 and Fig. 2). The operation support apparatus 100 includes a prediction unit 10 and a provision unit 14. The operation support apparatus 100 may include a determination unit 12, a state acquisition unit 16, a control unit 20, and an input unit 22.

The operation support apparatus 100 is, for example, a computer including a CPU, a memory, an interface, and the like. The control unit 20 may be the CPU. The control unit 20 and the determination unit 12 may be the CPU. When the operation support apparatus 100 is a computer, there may be installed, on the computer, an operation support program that causes an operation support method described later to be performed or an operation support program that causes the computer to function as the operation support apparatus 100. The operation support apparatus 100 may be a tablet computer.

The state acquisition unit 16 acquires a state of a target object 210 in the electrolysis apparatus 200. The target object 210 is a part, a member, or the like included in the electrolysis apparatus 200, and refers to a part, a member, or the like which is preferably maintained periodically. The target object 210 may include a raw salt 110, a filter 114, an ion exchange resin 118, a first aqueous solution 70, first induction piping 92 (see Fig. 1 above), second induction piping 93, first discharge piping 94, second discharge piping 95, first valves 66, first valves 67 (see Fig. 2 above), an ion exchange membrane 84, an anode 80, and a cathode 82 (see Fig. 3 above).

The input unit 22 is, for example, a mouse, a keyboard, or the like. When the operation support apparatus 100 is a tablet computer, the input unit 22 may be a touch panel of the tablet computer.

The provision unit 14 provides information on maintenance of the target object 210 (to be described later). The provision unit 14 may be a display, a monitor, or the like which displays the information, or may be a speaker which outputs the information with a sound.

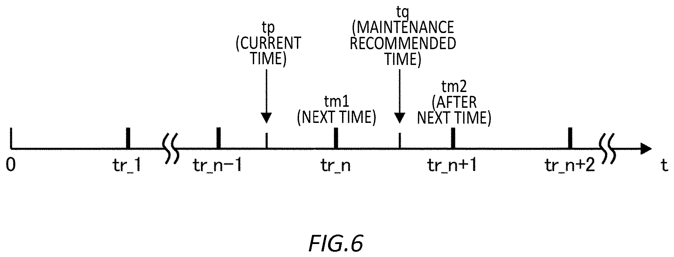

Fig. 6 illustrates examples of a maintenance time and a maintenance recommended time of an electrolysis apparatus 200. It is assumed that running of the electrolysis apparatus 200 is started at a time zero. A maintenance time of the electrolysis apparatus 200 is referred to as a maintenance time tr. The maintenance time tr is predetermined. The maintenance time tr may be periodic and a constant period. The maintenance time tr may be a time for a planned stop of the electrolysis apparatus 200, or may be a time for periodic maintenance of the electrolysis apparatus 200. The maintenance time tr is a time at which the target object 210 (to be described later) can be maintained. Fig. 6 shows a first maintenance time tr_1 to a (n+2)th maintenance time tr_n+2 after the running of the electrolysis apparatus 200 is started.

A current time is referred to as a time tp. It is assumed that the time tp is a time between a maintenance time tr_n-1 and a maintenance time tr_n. With respect to the time tp, the maintenance time tr which comes next is referred to as a first maintenance time tm1, and the maintenance time tr which comes after the next is referred to as a second maintenance time tm2. The second maintenance time tm2 comes after the first maintenance time tm1.

A state of the target object 210 (see Fig. 5) is referred to as a state S. The state S, which is a state S of the target object 210 and in which maintenance is preferably performed, is referred to as a maintenance recommended state Sn. The maintenance recommended state Sn may include a state in which maintenance of the target object 210 needs to be performed and a state in which the maintenance does not necessarily need to be performed but is preferably performed. A time at which maintenance of the electrolysis apparatus 200 is preferably performed is referred to as a maintenance recommended time tq. The maintenance recommended time tq may include a time at which the maintenance of the target object 210 needs to be performed and a time at which the maintenance does not necessarily need to be performed but is preferably performed.

The target object 210 (see Fig. 5) being in a maintenance recommended state means that the target object 210 is at, for example, an end of lifespan. The target object 210 being in the maintenance recommended state may mean that it is in a state in which an operating cost of the electrolysis apparatus 200 when the target object 210 is replaced is lower than an operating cost of the electrolysis apparatus 200 when the target object 210 is not replaced. The operating cost may include an electricity cost associated with operation of the electrolysis apparatus 200 and a cost of the target object 210 for a case where the target object 210 is replaced.

The prediction unit 10 predicts the maintenance recommended time tq at which the target object 210 in the electrolysis apparatus 200 is put into the maintenance recommended state Sn. A determination unit 12 (see Fig. 5) determines a temporal relation between the first maintenance time tm1 and the maintenance recommended time tq as well as a temporal relation between the second maintenance time tm2 and the maintenance recommended time tq. When it is determined by the determination unit 12 that the maintenance recommended time tq comes after the first maintenance time tm1 and comes before the second maintenance time tm2, a provision unit 14 (see Fig. 5) provides information for recommending that the maintenance of the target object 210 (see Fig. 5) should be performed at the first maintenance time tm1. This allows a user of an operation support apparatus 100 to recognize at the current time tp that the target object 210 is expected to be not put into the maintenance recommended state Sn at the first maintenance time tm1 but to be put into the maintenance recommended state Sn before the second maintenance time tm2.

The information for recommending the maintenance of the target object 210 (see Fig. 5) may be information for recommending replacement of the target object 210, or may be information for recommending that a lifespan of the target object 210 should be measured. The provision unit 14 (see Fig. 5) may provide at the current time tp the information for recommending the maintenance of the target object 210, may provide it at the first maintenance time tm1, or may continuously provide it from the current time tp to the maintenance recommended time tq.

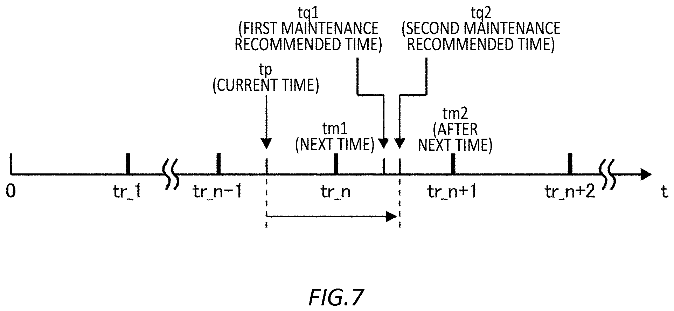

Fig. 7 illustrates other examples of a maintenance time and a maintenance recommended time of an electrolysis apparatus 200. A maintenance recommended state Sn may be predetermined. A predetermined maintenance recommended state Sn is, for example, an end of lifespan according to specifications of a target object 210 (see Fig. 5). The predetermined maintenance recommended state Sn may be a state S of the target object 210 which is difficult for a state acquisition unit 16 to acquire. The target object 210 for which it is difficult for the state acquisition unit 16 to acquire the state S is, for example, a filter 114, an ion exchange resin 118, or the like.

A maintenance recommended time tq at which the target object 210 is put into the predetermined maintenance recommended state Sn is referred to as a first maintenance recommended time tq1. A prediction unit 10 may predict the first maintenance recommended time tq1 at which the target object 210 is put into the maintenance recommended state Sn, as the maintenance recommended time tq. The first maintenance recommended time tq1 may be an end-of-life time according to specifications of the target object 210. When the first maintenance recommended time tq1 is an end-of-life time according to specifications of the target object 210, the end-of-life time according to the specifications may be inputted by an input unit 22 (see Fig. 5).

The prediction unit 10 (see Fig. 5) may predict a second maintenance recommended time at which the target object 210 is put into the maintenance recommended state Sn, as the maintenance recommended time tq, on a basis of the state S of the target object 210 (see Fig. 5) acquired by the state acquisition unit 16 (see Fig. 5). The maintenance recommended time tq predicted on a basis of the state S is referred to as a second maintenance recommended time tq2. Fig. 7 is an example of the second maintenance recommended time tq2 predicted at a current time tp. The first maintenance recommended time tq1 and the second maintenance recommended time tq2 may be different.

The state acquisition unit 16 (see Fig. 5) may acquire current efficiency CE (to be described later) of an electrolyzer 90. The prediction unit 10 (see Fig. 5) may predict the second maintenance recommended time tq2 on a basis of the current efficiency CE. Assuming that a production amount per hour of a product produced by the electrolyzer 90 is a production amount Pa' (T/h), a production amount per day is a production amount Pa, a molecular weight of the product is a molecular weight M (kg/kmol), current flowing through the electrolyzer 90 is current I (kA), and the number of cells in the electrolyzer 90 is the number of cells N, it is preferable that the production amount Pa' per day should satisfy Expression 1 described below.

(Expression 1)

$$Pa = 24 \times Pa' > (0.0373 \times M \times I \times N \times 24 \times CE)/1000 \qquad (1)$$

The prediction unit 10 may predict a time at which inequality of Expression 1 is no longer satisfied. The second maintenance recommended time tq2 may be the time at which the inequality of Expression 1 is no longer satisfied.

The state acquisition unit 16 (see Fig. 5) may acquire voltage CV (to be described later) of the electrolyzer 90. The prediction unit 10 (see Fig. 5) may predict the second maintenance recommended time tq2 on a basis of the voltage CV. When a coating condition of metal or the like with which surfaces of an anode 80 and a cathode 82 (see Fig. 3) are coated degrades, the voltage CV (to be described later) may increase. The prediction unit 10 (see Fig. 5) may predict a time at which a percentage of a coating amount for the anode 80 and the cathode 82 (see Fig. 3) to the coating amount at the beginning of use of the anode 80 and the cathode 82 (see Fig. 3) becomes a predetermined percentage, on a basis of the voltage CV. The percentage is, for example, 30%.

The state acquisition unit 16 (see Fig. 5) may acquire an impurity concentration in the product produced by the electrolyzer 90, on a basis of the state S. When the product is NaOH (sodium hydroxide), the impurity is at least one of NaCl (sodium chloride) or $NaClO_3$ (sodium chlorate). When the product is $Cl_2$ (chlorine), the impurity is $O_2$ (oxygen). The prediction unit 10 (see Fig. 5) may predict the second maintenance recommended time tq2 on a basis of the impurity concentration in the product produced by the electrolyzer 90. The second maintenance recommended time tq2 may be a time at which the impurity concentration becomes equal to or higher than a predetermined concentration.

The state acquisition unit 16 (see Fig. 5) may acquire an impurity concentration of gas 78 (see Fig. 3) on a basis of the state S. When the gas 78 is $H_2$ (hydrogen), the impurity is $Cl_2$ (chlorine). The prediction unit 10 (see Fig. 5) may predict the second maintenance recommended time tq2 on a basis of the impurity concentration of the gas 78 (see Fig. 3). The second maintenance recommended time tq2 may be a time at which the impurity concentration becomes equal to or higher than a predetermined concentration. When the gas 78 is $H_2$ (hydrogen) and the impurity is $Cl_2$ (chlorine), the concentration may be a predetermined concentration with respect to an explosion limit concentration which may cause an explosion due to excess $Cl_2$ (chlorine). The concentration is, for example, 0.3 %.

The state acquisition unit 16 (see Fig. 5) may acquire at least one of temperature of liquid 74 or temperature of a fourth aqueous solution 76 measured by a temperature sensor 135 (to be described later). The prediction unit 10 (see Fig. 5) may predict the second maintenance recommended time tq2 on a basis of the temperature of the liquid 74 or the temperature of the fourth aqueous solution 76. The second maintenance recommended time tq2 may be a time at which the temperature of the liquid 74 or the temperature of the fourth aqueous solution 76 becomes equal to or lower than a predetermined first temperature or a time at which the temperature of the liquid 74 or the temperature of the fourth aqueous solution 76 becomes equal to or higher than a predetermined second temperature. The first temperature is, for example, 80 degrees C. The second temperature is, for example, 87 degrees C.

The state acquisition unit 16 (see Fig. 5) may acquire at least one of a first pH (to be described later) or a second pH (to be described later) measured by a pH sensor 136 (to be described later). The prediction unit 10 (see Fig. 5) may predict the second maintenance recommended time tq2 on a basis of the first pH or the second pH. The second maintenance recommended time tq2 may be a time at which at least one of a hydrogen ion concentration of a first aqueous solution 70 or a hydrogen ion concentration of a second aqueous solution 72 becomes equal to or higher than 0.15 N (normality).

The state acquisition unit 16 (see Fig. 5) may continuously acquire the state S of the target object 210 (see Fig. 5) from the current time tp to the second maintenance recommended time tq2. The prediction unit 10 (see Fig. 5) may continuously predict the second maintenance recommended time tq2. The second maintenance recommended time tq2 may be updated as time passes.

The state acquisition unit 16 (see Fig. 5) may acquire the state S of the target object 210 (see Fig. 5) regardless of whether the electrolysis apparatus 200 is running or is at a maintenance time tr. The prediction unit 10 (see Fig. 5) may predict the second maintenance recommended time tq2 regardless of whether the electrolysis apparatus 200 is running or is at the maintenance time tr. The state acquisition unit 16 may acquire the state S of the target object 210 at a first maintenance time tm1. The prediction unit 10 may predict the second maintenance recommended time tq2 on a basis of the state S of the target object 210 measured at the first maintenance time tm1.

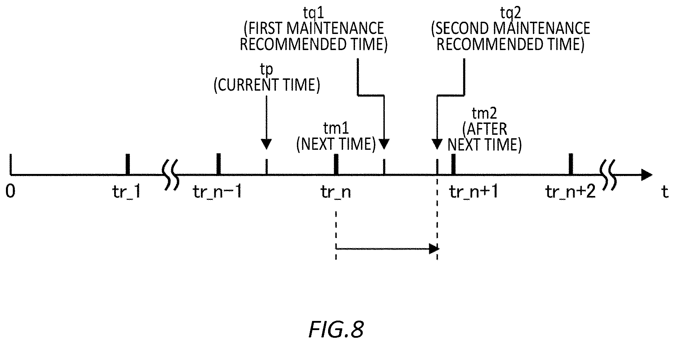

Fig. 8 illustrates other examples of a maintenance time and a maintenance recommended time of an electrolysis apparatus 200. Fig. 8 is an example of a case where it is determined by a determination unit 12 (see Fig. 5) that a first maintenance recommended time tq1 comes after a first maintenance time tm1 and before a second maintenance time tm2. In a case of the example shown in Fig. 8, a state acquisition unit 16 (see Fig. 5) may measure a state S of a target object 210 (see Fig. 5) at the first maintenance time tm1. A prediction unit 10 (see Fig. 5) may predict a second maintenance recommended time tq2 at the first maintenance time tm1.

As described above, the first maintenance recommended time tq1 is a maintenance recommended time tq at which the target object 210 (see Fig. 5) is put into a predetermined maintenance recommended state Sn. When the first maintenance recommended time tq1 comes after the first maintenance time tm1 and before the second maintenance time tm2, there is a high probability that a time is approaching at which the target object 210 is put into the predetermined maintenance recommended state Sn. Therefore, the prediction unit 10 (see Fig. 5) predicting the second maintenance recommended time tq2 at the first maintenance time tm1 allows a user of an operation support apparatus 100 to recognize the maintenance recommended time tq (that is, the second maintenance recommended time tq2) of the target object 210 based on the state S, at the first maintenance time tm1. This makes it easier for the user of the operation support apparatus 100 to determine whether replacement or the like of the target object 210 should be performed at the first maintenance time tm1.

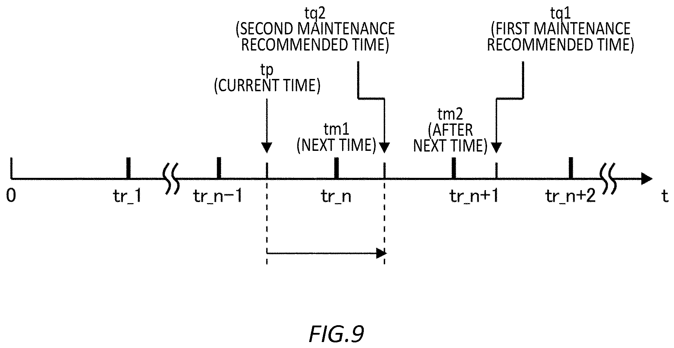

Fig. 9 illustrates other examples of a maintenance time and a maintenance recommended time of an electrolysis apparatus 200. Fig. 9 is an example of a case where a determination unit 12 (see Fig. 5) determines that a first maintenance recommended time tq1 comes after a second maintenance time tm2 and determines that a second maintenance recommended time tq2 comes after a first maintenance time tm1 and before the second maintenance time tm2. In a case of the example shown in Fig. 9, a provision unit 14 (see Fig. 5) may provide information for recommending that maintenance of a target object 210 (see Fig. 5) should be performed at the first maintenance time tm1. The provision unit 14 may provide the information at a current time tp.

The example shown in Fig. 9 is a case where there is a high probability that the target object 210 (see Fig. 5) is put into a maintenance recommended state Sn earlier than a maintenance recommended time tq (that is, the first maintenance recommended time tq1) at which the target object 210 is put into a predetermined maintenance recommended state Sn. Therefore, the provision unit 14 (see Fig. 5) providing information for recommending that maintenance of the target object 210 should be performed at the first maintenance time tm1 makes it easier for a user of an operation support apparatus 100 to perform the maintenance of the target object 210 at the first maintenance time tm1.

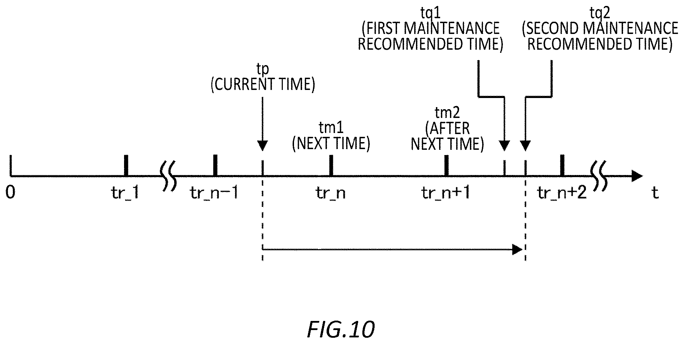

It should be noted that, as described above, the target object 210 may include multiple kinds of parts, members, or the like included in the electrolysis apparatus 200. In the examples shown in Fig. 8, Fig. 9, and the following Fig. 10, the prediction unit 10 may predict the first maintenance recommended time tq1 and the second maintenance recommended time tq2 for the same target object 210 (for example, an ion exchange membrane 84).

Fig. 10 illustrates other examples of a maintenance time and a maintenance recommended time of an electrolysis apparatus 200. Fig. 10 is an example of a case where it is determined by a determination unit 12 (see Fig. 5) that a first maintenance recommended time tq1 and a second maintenance recommended time tq2 come after a second maintenance time tm2.

As described above, a filter 114 and a resin tower 116 (see Fig. 1) remove an impurity Im. In a sedimentation and separation tank 112, when a chemical agent 111 having an equivalent equal to an equivalent of an alkali earth metal contained in a raw salt 110 is induced, there is a high probability that the alkali earth metal contained in the raw salt 110 becomes a carbonate. When an object to be detected Db is detected in a first aqueous solution 70 (see Fig. 3) by a detection unit 99, there is a high probability that the impurity Im is induced into an electrolyzer 90 after passing through the filter 114 and the resin tower 116. That is, there is a high probability that an equivalent of the chemical agent 111 is smaller than the equivalent of the alkali earth metal contained in the raw salt 110. As result of the chemical agent 111 being induced into the first aqueous solution 70, there is a higher probability that the chemical agent 111 having an equivalent equal to or greater than the equivalent of the alkali earth metal contained in the raw salt 110 is induced into the sedimentation and separation tank 112.

Pressure of the first aqueous solution 70 which has not yet passed through the filter 114 (see Fig. 1) and pressure of the first aqueous solution 70 which has passed through the filter 114 measured by a first pressure sensor 122 (see Fig. 1) are respectively referred to as a first pressure P1 and a second pressure P2. The determination unit 12 (see Fig. 5) may determine whether a difference between the first pressure P1 and the second pressure P2 is above a predetermined threshold difference.

As described above, the filter 114 (see Fig. 1) removes the carbonate of the alkali earth metal which is poorly water-soluble. Therefore, when the carbonate accumulates on the filter 114, performance of the filter 114 to remove the carbonate easily decreases. As more of the carbonate accumulates on the filter 114, the second pressure P2 becomes lower than the first pressure P1 more easily. The predetermined threshold difference may be a difference which allows the performance of the filter 114 to remove the carbonate to be equal to or higher than predetermined performance.

When the determination unit 12 (see Fig. 5) determines that the difference between the first pressure P1 and the second pressure P2 is above the predetermined threshold difference, a provision unit 14 (see Fig. 5) may provide information for recommending update of the filter 114. The update of the filter 114 may refer to removing the impurity Im accumulated on the filter 114, or may refer to replacement of the filter 114. This makes it easier for a user of an operation support apparatus 100 to update the filter 114 at an appropriate time. The filter 114 may be updated at a maintenance time tr.

An ion exchange resin 118 (see Fig. 1) may be regenerated. As described above, the ion exchange resin 118 removes an ion of an alkali earth metal. Therefore, when the ion of the alkali earth metal is attached to an anion group 86 of the ion exchange resin 118, performance of the ion exchange resin 118 to remove the ion of the alkali earth metal easily decreases. Regenerating the ion exchange resin 118 may refer to removing the ion of the alkali earth metal attached to the anion group 86.

When the ion exchange resin 118 is provided in the resin tower 116, back washing of the ion exchange resin 118 may be performed by allowing pure water to flow through the resin tower 116 in a direction opposite to a direction in which the first aqueous solution 70 flows. A flow rate sensor 119 (see Fig. 1) measures a flow rate of the pure water. The determination unit 12 (see Fig. 5) may calculate a back washing speed of the ion exchange resin 118 on a basis of the flow rate of the pure water measured by the flow rate sensor 119.

The determination unit 12 (see Fig. 5) may determine whether the back washing speed of the ion exchange resin 118 is above a predetermined threshold back washing speed. As more suspended matters or organic matters accumulate on the ion exchange resin 118, the back washing speed of the ion exchange resin 118 easily increases. The predetermined threshold back washing speed may be a back washing speed which allows performance of the ion exchange resin 118 to remove the impurity Im to be equal to or higher than predetermined performance.

When it is determined that the back washing speed of the ion exchange resin 118 is above the predetermined threshold back washing speed, the provision unit 14 (see Fig. 5) may provide information for recommending update of the ion exchange resin 118. The update of the ion exchange resin 118 may refer to removing the impurity Im of the alkali earth metal accumulated on the ion exchange resin 118 by allowing the pure water to flow, or may refer to replacement of the ion exchange resin 118. This makes it easier for the user of the operation support apparatus 100 to update the ion exchange resin 118 at an appropriate time. The ion exchange resin 118 may be update at the maintenance time tr.

When the ion exchange resin 118 is provided in the resin tower 116, regeneration of the ion exchange resin 118 may be performed by inducing a chemical solution such as HCl (hydrochloric acid) or NaOH (sodium hydroxide) into the resin tower 116,

The determination unit 12 may determine an induced amount of the chemical solution. When the determination unit 12 determines that the induced amount of the chemical solution is above a threshold, the provision unit 14 may provide information indicating that the induced amount of the chemical solution is abnormal.

An image sensor 120 may be provided in a resin window in the resin tower 116. The image sensor 120 (see Fig. 1) measures a resin height in the resin tower. The determination unit 12 may determine the resin height on a basis of the resin height measured by the image sensor 120. When it is determined by the determination unit 12 that the resin height is above a predetermined threshold resin height, the provision unit 14 may provide information indicating that the regeneration of the ion exchange resin 118 is recommended. The regeneration of the ion exchange resin 118 may include addition or replacement of the ion exchange resin 118. When it is determined by the determination unit 12 that a regeneration frequency of the ion exchange resin 118 is shorter than a predetermined time period, the provision unit 14 may provide information indicating that the replacement of the ion exchange resin 118 is recommended.

A state acquisition unit 16 may acquire a regeneration period of the ion exchange resin 118. When it is determined by the determination unit 12 that the regeneration period is above a predetermined threshold regeneration period, the provision unit 14 may provide the information indicating that the replacement of the ion exchange resin 118 is recommended.

A pressure sensor 123 measures the pressure of the first aqueous solution 70 induced into the resin tower 116 and the pressure of the first aqueous solution 70 discharged from the resin tower 116. The determination unit 12 may determine whether a difference between the pressure of the first aqueous solution 70 induced into the resin tower 116 and the pressure of the first aqueous solution 70 discharged from the resin tower 116 measured by the pressure sensor 123 is above a predetermined threshold pressure. When the determination unit 12 determines that the difference is above the threshold pressure, the provision unit 14 may provide the information indicating that the replacement of the ion exchange resin 118 is recommended.

The determination unit 12 (see Fig. 5) may determine whether a concentration of $SO_4^{2-}$ (sulfate ion) in the first aqueous solution 70 (see Fig. 1 and Fig. 3) is above a predetermined threshold sulfate ion concentration. When the first aqueous solution 70 containing $SO_4^{2-}$ (sulfate ion) is induced into an anode chamber 79 (see Fig. 3), $O_2$ (oxygen) is easily generated as a result of $H_2O$ (water) being oxidized in the electrolyzer 90. Therefore, the concentration of $SO_4^{2-}$ (sulfate ion) in the first aqueous solution 70 is preferably equal to or lower than the predetermined threshold sulfate ion concentration.

An impurity sensor 117 (see Fig. 1) measures a concentration of the ion of the alkali earth metal. A removal apparatus which removes the impurity Im may be provided outside the resin tower 116. When a concentration of the impurity Im measured by the impurity sensor 117 is above a predetermined threshold concentration, the impurity Im may be removed by the removal apparatus.

The state acquisition unit 16 (see Fig. 5) may acquire at least one of a flow rate of the first aqueous solution 70 (see Fig. 2) or a flow rate of a second aqueous solution 72 (see Fig. 2) measured by a flow rate sensor 130 (see Fig. 2). The flow rate of the first aqueous solution 70 is referred to as a flow rate F1. The flow rate of the second aqueous solution 72 is referred to as a flow rate F2. The state acquisition unit 16 may acquire the flow rate F1 and the flow rate F2 while the electrolysis apparatus 200 is running.

The determination unit 12 (see Fig. 5) may determine whether the flow rate F1 or the flow rate F2 is within a predetermined flow rate range. The flow rate range is referred to as a flow rate range Fr. When the flow rate F1 is not within the flow rate range Fr, salt easily deposits in the electrolyzer 90. When the flow rate F1 is not within the flow rate range Fr, water electrolysis easily occurs in the electrolyzer 90. The flow rate range Fr may include an upper limit flow rate and a lower limit flow rate of the flow rate range Fr.

When it is determined by the determination unit 12 that the flow rate F1 or the flow rate F2 is not within the flow rate range Fr, the provision unit 14 (see Fig. 5) may provide information for recommending maintenance of a target object 210 (see Fig. 5). As described above, the target object 210 is a part, a member, or the like included in the electrolysis apparatus 200, and refers to a part, a member, or the like which is preferably maintained periodically. This makes it easier for the user of the operation support apparatus 100 to perform the maintenance of the target object 210 at the maintenance time tr.

When it is determined that the flow rate F1 or the flow rate F2 is not within the flow rate range Fr, the determination unit 12 (see Fig. 5) may determine whether the flow rate F1 and flow rate F2 can be controlled to be within the flow rate range Fr by controlling first valves 66 and first valves 67 (see Fig. 2). When it is determined by the determination unit 12 that the flow rate F1 and the flow rate F2 cannot be controlled to be within the flow rate range Fr, the provision unit 14 (see Fig. 5) may provide information for recommending repair or replacement of first induction piping 92, second induction piping 93, the first valves 66, and the first valves 67. This makes it easier for the user of the operation support apparatus 100 to perform the repair or the replacement of the first induction piping 92, the second induction piping 93, the first valves 66, and the first valves 67 at the maintenance time tr. When it is determined by the determination unit 12 that the flow rate F1 and the flow rate F2 can be controlled to be within the flow rate range Fr, the user of the operation support apparatus 100 may manually control the first valves 66 and first valves 67 (see Fig. 2) at the maintenance time tr.

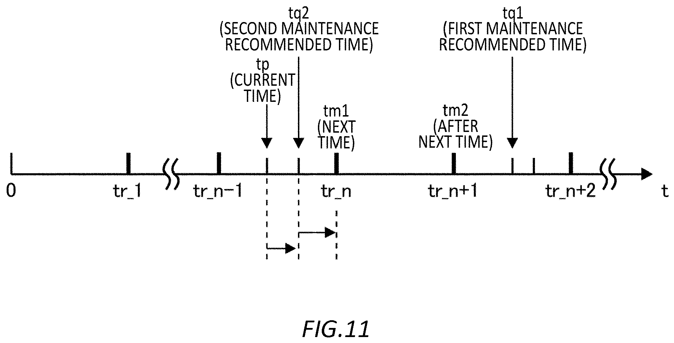

Fig. 11 illustrates other examples of a maintenance time and a maintenance recommended time of an electrolysis apparatus 200. Fig. 11 is an example of a case where a determination unit 12 (see Fig. 5) determines that a first maintenance recommended time tq1 comes after a second maintenance time tm2 and determines that a second maintenance recommended time tq2 comes before a first maintenance time tm1. When it is determined that the first maintenance recommended time tq1 comes after the second maintenance time tm2 and it is determined that the second maintenance recommended time tq2 comes before the first maintenance time tm1, a control unit 20 may delay the second maintenance recommended time tq2 until the first maintenance time tm1. The control unit 20 may delay the second maintenance recommended time tq2 until the first maintenance time tm1 by controlling a first valve 66 and a first valve 67.

A state acquisition unit 16 may acquire a state of a target object 210 at the first maintenance time tm1. The state acquisition unit 16 may postpone acquisition of the state of the target object 210 until the first maintenance time tm1. The state acquisition unit 16 may postpone the acquisition of the state of the target object 210 until the first maintenance time tm1 by changing at least one of current efficiency CE (to be described later), voltage CV (to be described later), a flow rate F1, a flow rate F2, temperature T1 (to be described later), temperature T2 (to be described later), pressure Pr1 (to be described later), or pressure Pr2 (to be described later).

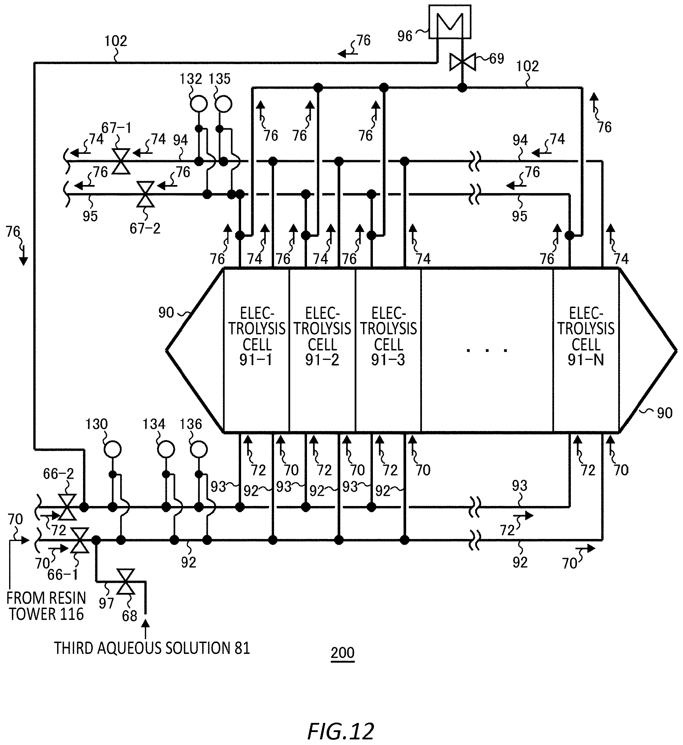

Fig. 12 illustrates another example of an electrolysis apparatus 200 according to one embodiment of the present invention. The electrolysis apparatus 200 in the present example is provided with a temperature sensor 134, a temperature sensor 135, a pH sensor 136, third induction piping 97, fourth induction piping 102, a second valve 68, a third valve 69, and a heat exchanger 96. The electrolysis apparatus 200 in the present example is different from the electrolysis apparatus 200 shown in Fig. 2 in this respect. A third aqueous solution 81, which is an acidic aqueous solution, passes through the third induction piping 97. The third aqueous solution 81 is, for example, HCl (hydrochloric acid). The second valve 68 is provided in the third induction piping 97. In the present example, HCl (hydrochloric acid) is induced into first induction piping 92 through the third induction piping 97.

The fourth induction piping 102 is connected to the heat exchanger 96 and second induction piping 93. A fourth aqueous solution 76 passes through the fourth induction piping 102. The heat exchanger 96 cools the fourth aqueous solution 76. The fourth aqueous solution 76 which has been cooled is induced into the second induction piping 93.

The temperature sensor 134 measures at least one of temperature of a first aqueous solution 70 or temperature of a second aqueous solution 72. In the present example, the temperature sensor 134 measures at least one of the temperature of the first aqueous solution 70 passing through the first induction piping 92 or the temperature of the second aqueous solution 72 passing through the second induction piping 93. The temperature sensor 134 may be provided in the first induction piping 92 and the second induction piping 93. The temperature of the first aqueous solution 70 is referred to as temperature T1. The temperature of the second aqueous solution 72 is referred to as temperature T2.

The temperature sensor 135 measures at least one of temperature of liquid 74 or temperature of the fourth aqueous solution 76. In the present example, the temperature sensor 135 measures at least one of the temperature of the liquid 74 passing through the first discharge piping 94 or the temperature of the fourth aqueous solution 76 passing through the second discharge piping 95. The temperature sensor 135 may be provided in the first discharge piping 94 and the second discharge piping 95.

A state acquisition unit 16 (see Fig. 5) may acquire at least one of the temperature T1 or the temperature T2 measured by the temperature sensor 134. The state acquisition unit 16 may acquire the temperature T1 and temperature T2 while the electrolysis apparatus 200 is running. A determination unit 12 (see Fig. 5) may determine whether the temperature T1 or the temperature T2 is above a predetermined threshold temperature. The threshold temperature is referred to as a threshold Tth. The threshold Tth may be an upper limit of the temperature T1 and the temperature T2 for a case where the electrolysis apparatus 200 is properly running.

When it is determined by the determination unit 12 that the temperature T1 or the temperature T2 is above the threshold Tth, a provision unit 14 (see Fig. 5) may provide information for recommending maintenance of a target object 210 (see Fig. 5). As described above, the target object 210 is a part, a member, or the like included in the electrolysis apparatus 200, and refers to a part, a member, or the like which is preferably maintained periodically. This makes it easier for a user of an operation support apparatus 100 to perform the maintenance of the target object 210 at a maintenance time tr.

When it is determined by the determination unit 12 that the temperature T1 or the temperature T2 is above the threshold Tth, the determination unit 12 may determine whether the temperature T1 and the temperature T2 can be controlled to be equal to or lower than the threshold Tth, respectively, by controlling the third valve 69. When it is determined by the determination unit 12 that the temperature T1 and temperature T2 cannot be controlled to be equal to or lower than the threshold Tth, the provision unit 14 (see Fig. 5) may provide information for recommending repair or replacement of the fourth induction piping 102 and the third valve 69. This makes it easier for the user of the operation support apparatus 100 to perform the repair or the replacement of the fourth induction piping 102 and the third valve 69 at the maintenance time tr.

The pH sensor 136 measures at least one of a pH of the first aqueous solution 70 or a pH of the second aqueous solution 72. In the present example, the pH sensor 136 measures at least one of the pH of the first aqueous solution 70 passing through the first induction piping 92 or the pH of the second aqueous solution 72 passing through the second induction piping 93. The pH sensor 136 may be provided in the first induction piping 92 and the second induction piping 93. The pH of the first aqueous solution 70 is referred to as a first pH. The pH of the second aqueous solution 72 is referred to as a second pH.

The state acquisition unit 16 (see Fig. 5) may acquire at least one of the first pH or the second pH measured by the pH sensor 136. The state acquisition unit 16 may acquire the first pH and the second pH while the electrolysis apparatus 200 is running. The determination unit 12 (see Fig. 5) may determine whether the first pH is below a predetermined threshold first pH or whether the second pH is above a predetermined threshold second pH. A threshold first pH is referred to as a threshold Pth1. A threshold second pH is referred to as a threshold Pth2. The threshold Pth1 and the threshold Pth2 may be respectively a lower limit of the first pH and an upper limit of the second pH for a case where the electrolysis apparatus 200 is properly running. When the determination unit 12 determines that the first pH measured by the pH sensor 136 is below the threshold Pth1 or determines that the second pH is above the threshold Pth2, the provision unit 14 (see Fig. 5) may provide the information for recommending the maintenance of the target object 210 (see Fig. 5).

When the determination unit 12 determines that the first pH is below the threshold Pth1 or determines that the second pH is above the threshold Pth2, the determination unit 12 may determine whether the first pH can be controlled to be equal to or higher than the threshold Pth1 and whether the second pH can be controlled to be equal to or lower than the threshold Pth2, respectively, by controlling the second valve 68 (see Fig. 2). When the determination unit 12 determines that the first pH cannot be controlled to be equal to or higher than the threshold Pth1 and determines that the second pH cannot be controlled to be equal to or lower than the threshold Pth2, the provision unit 14 (see Fig. 5) may provide information for recommending repair or replacement of the third induction piping 97 and the second valve 68. This makes it easier for the user of the operation support apparatus 100 to perform the repair or the replacement of the third induction piping 97 and the second valve 68 at the maintenance time tr.

A second pressure sensor 132 measures at least one of pressure of a chlorine gas ($Cl_2$) in an anode chamber 79 (see Fig. 3) or pressure of a hydrogen gas ($H_2$) in a cathode chamber 98 (see Fig. 3). The pressure of the chlorine gas ($Cl_2$) is referred to as pressure Pr1. The pressure of the hydrogen gas ($H_2$) is referred to as pressure Pr2.

The state acquisition unit 16 (see Fig. 5) may acquire at least one of the pressure Pr1 or the pressure Pr2 measured by the second pressure sensor 132. The state acquisition unit 16 may acquire the pressure Pr1 and the pressure Pr2 while the electrolysis apparatus 200 is running. The determination unit 12 (see Fig. 5) may determine whether the pressure Pr1 or the pressure Pr2 is above a predetermined threshold pressure. The threshold pressure is referred to as a threshold Prth. The threshold Prth may be an upper limit of the pressure P1 and the pressure P2 for a case where the electrolysis apparatus 200 is properly running. When it is determined by the determination unit 12 that the pressure P1 or the pressure P2 is above the threshold Prth, the provision unit 14 (see Fig. 5) may provide the information for recommending the maintenance of the target object 210 (see Fig. 5).

When it is determined by the determination unit 12 that the pressure P1 or the pressure P2 is above the threshold Prth, the determination unit 12 may determine whether the pressure Pr1 and the pressure Pr2 can be controlled to be equal to or lower than the threshold Prth, respectively, by controlling first valves 66 and first valves 67 (see Fig. 2). When it is determined by the determination unit 12 that the pressure Pr1 and the pressure Pr2 cannot be controlled to be equal to or lower than the threshold Prth, the provision unit 14 (see Fig. 5) may provide information for recommending maintenance of the anode chamber 79 (see Fig. 3) and the cathode chamber 98 (see Fig. 3). This makes it easier for the user of the operation support apparatus 100 to perform the maintenance of the anode chamber 79 (see Fig. 3) and the cathode chamber 98 (see Fig. 3) at the maintenance time tr.

The state acquisition unit 16 (see Fig. 5) may acquire current efficiency of an electrolyzer 90. The current efficiency of the electrolyzer 90 is referred to as current efficiency CE. The current efficiency CE refers to a percentage of an actual production amount to a theoretical production amount of a product produced by the electrolyzer 90. The state acquisition unit 16 may acquire the current efficiency CE while the electrolysis apparatus 200 is running.

A prediction unit 10 (see Fig. 5) may predict the current efficiency CE at a second maintenance time tm2 (see Figs. 6 to 11) on a basis of the current efficiency CE acquired by the state acquisition unit 16 (see Fig. 5). The prediction unit 10 may predict, at a time tp (see Figs. 6 to 11), the current efficiency CE at the second maintenance time tm2 on a basis of the current efficiency CE acquired by the state acquisition unit 16. When ion exchange performance of an ion exchange membrane 84 degrades, the current efficiency CE may decrease.

The determination unit 12 (see Fig. 5) may determine whether the current efficiency CE predicted by the prediction unit 10 becomes below a predetermined current efficiency at the second maintenance time tm2. The threshold current efficiency is referred to as a threshold CEth. The threshold CEth may be a lower limit of the current efficiency CE which allows the electrolysis apparatus 200 to properly run, or may be the current efficiency CE for achieving a target production amount of the product produced by the electrolyzer 90.

When it is determined by the determination unit 12 (see Fig. 5) that the current efficiency CE becomes below the threshold CEth at the second maintenance time tm2, the provision unit 14 (see Fig. 5) may provide information for recommending that the ion exchange membrane 84 (see Fig. 3) should be updated at a first maintenance time tm1 (see Figs. 6 to 11). This makes it easier for the user of the operation support apparatus 100 to perform update of the ion exchange membrane 84 before the current efficiency CE becomes below the threshold CEth.

The update of the ion exchange membrane 84 may refer to removing an impurity accumulated on the ion exchange membrane 84, or may refer to replacing the ion exchange membrane 84. An impurity Im induced into the anode chamber 79 or the cathode chamber 98 may accumulate on the ion exchange membrane 84.

The state acquisition unit 16 (see Fig. 5) may acquire voltage of the electrolyzer 90. The voltage of the electrolyzer 90 is referred to as voltage CV. The state acquisition unit 16 may acquire the voltage CV while the electrolysis apparatus 200 is running. The prediction unit 10 (see Fig. 5) may predict the voltage CV at the second maintenance time tm2 (see Figs. 6 to 11) on a basis of the voltage CV acquired by the state acquisition unit 16. The prediction unit 10 (see Fig. 5) may predict, at the time tp (see Figs. 6 to 11), the voltage CV at the second maintenance time tm2 (see Figs. 6 to 11) on a basis of the voltage CV acquired by the state acquisition unit 16. When the ion exchange performance of the ion exchange membrane 84 (see Fig. 3) degrades, the voltage CV may increase. When a coating condition of metal or the like with which surfaces of an anode 80 and a cathode 82 (see Fig. 3) are coated degrades, the voltage CV may increase.

The determination unit 12 (see Fig. 5) may determine whether the voltage CV predicted by the prediction unit 10 exceeds a predetermined threshold voltage at the second maintenance time tm2. The threshold voltage is referred to as a threshold CVth. The threshold CVth may be an upper limit of the voltage CV which allows the electrolysis apparatus 200 to properly run.

When it is determined by the determination unit 12 (see Fig. 5) that the voltage CV exceeds the threshold CVth at the second maintenance time tm2, the provision unit 14 (see Fig. 5) may provide information for recommending that at least one of the ion exchange membrane 84 (see Fig. 3), the anode 80, or the cathode 82 (see Fig. 3) should be updated at the first maintenance time tm1 (see Figs. 6 to 11). This makes it easier for the user of the operation support apparatus 100 to perform update of at least one of the ion exchange membrane 84, the anode 80, or the cathode 82 before the voltage CV exceeds the threshold CVth.

The user of the operation support apparatus 100 may manually update at least one of the ion exchange membrane 84 (see Fig. 3), the anode 80, or the cathode 82 (see Fig. 3) at the first maintenance time tm1 (see Figs. 6 to 11). The user may measure a coating amount of the metal or the like with which the surfaces of the anode 80 and the cathode 82 are coated. The user may input the coating amount to the operation support apparatus 100 with an input unit 22 (see Fig. 5).

The surfaces of the anode 80 and the cathode 82 are coated with metal such as Ru. A threshold of the coating amount of the metal is referred to as a threshold Ath. When the coating amount has become below the threshold Ath, there is a higher probability that electrolysis in the electrolyzer 90 (see Fig. 3) stops properly operating. The threshold Ath may be a specification value for the anode 80 and the cathode 82.

When the coating amount for the anode 80 and the cathode 82 is below the threshold Ath at the first maintenance time tm1 (see Figs. 6 to 11), the provision unit 14 (see Fig. 5) may provide information for recommending that at least one of the anode 80 or the cathode 82 (see Fig. 3) should be updated at the second maintenance time tm2 (see Figs. 6 to 11). When the coating amount for the anode 80 and the cathode 82 is equal to or greater than the threshold Ath at the first maintenance time tm1 (see Figs. 6 to 11), the provision unit 14 (see Fig. 5) may provide information for recommending that the ion exchange membrane 84 (see Fig. 3) should be updated at the second maintenance time tm2 (see Figs. 6 to 11).

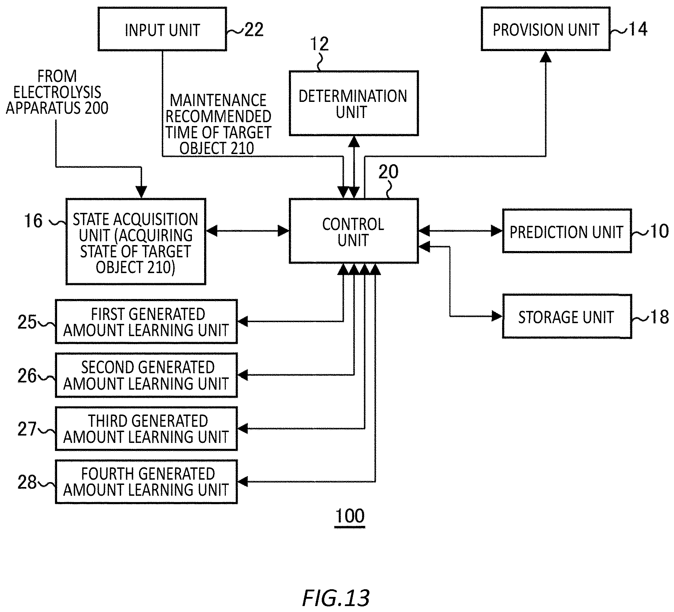

Fig. 13 illustrates another example of a block diagram of an operation support apparatus 100 according to one embodiment of the present invention. The operation support apparatus 100 in the present example is different from the operation support apparatus shown in Fig. 5 in that it further includes a storage unit 18, a first generated amount learning unit 25, a second generated amount learning unit 26, a third generated amount learning unit 27, and a fourth generated amount learning unit 28. $CO_2$ (carbon dioxide) may be generated with running of an electrolysis apparatus 200. The $CO_2$ (carbon dioxide) generated with the running of the electrolysis apparatus 200 refers to, for example, $CO_2$ (carbon dioxide) generated as a result of the electrolysis apparatus 200 consuming electricity.

The storage unit 18 may store a relationship between current efficiency CE and an amount of the $CO_2$ (carbon dioxide) generated with the running of the electrolysis apparatus 200. The amount of the $CO_2$ (carbon dioxide) may refer to a volume of $CO_2$ (carbon dioxide) generated by the electrolysis apparatus 200 per unit time. The storage unit 18 may store a relationship between voltage CV and the amount of the $CO_2$ (carbon dioxide) generated with the running of the electrolysis apparatus 200.

A determination unit 12 may calculate the amount of the $CO_2$ (carbon dioxide) generated with the running of the electrolysis apparatus 200 on a basis of the current efficiency CE acquired by a state acquisition unit 16 as well as the relationship between the current efficiency CE and the amount of the $CO_2$ (carbon dioxide). The determination unit 12 may calculate the amount of the $CO_2$ (carbon dioxide) generated with the running of the electrolysis apparatus 200 on a basis of the voltage CV acquired by the state acquisition unit 16 as well as the relationship between the voltage CV and the amount of the $CO_2$ (carbon dioxide) generated with the running of the electrolysis apparatus 200. A provision unit 14 may provide the amount of the $CO_2$ (carbon dioxide) calculated by the determination unit 12. This allows a user of the operation support apparatus 100 to recognize an amount of the $CO_2$ (carbon dioxide) generated by the electrolysis apparatus 200.

The storage unit 18 may store a relationship between a kind of a raw salt 110 (see Fig. 1) and the amount of the $CO_2$ (carbon dioxide) generated by the electrolysis apparatus 200. The kind of the raw salt 110 may refer to a kind of an element constituting the raw salt 110, or may refer to a production area of the raw salt 110. The state acquisition unit 16 may acquire the kind of the raw salt 110. The state acquisition unit 16 may acquire the kind of the raw salt 110 while the electrolysis apparatus 200 is running.

The determination unit 12 may calculate the amount of the $CO_2$ (carbon dioxide) generated with the running of the electrolysis apparatus 200 on a basis of the kind of the raw salt 110 (see Fig. 1) acquired by the state acquisition unit 16 as well as a relationship between the kind of the raw salt 110 and the amount of the $CO_2$ (carbon dioxide) generated with the running of the electrolysis apparatus 200. The provision unit 14 may provide the amount of the $CO_2$ (carbon dioxide) calculated by the determination unit 12. This allows the user of the operation support apparatus 100 to recognize the amount of the $CO_2$ (carbon dioxide) generated by the electrolysis apparatus 200.

The storage unit 18 may store a relationship between an induced amount of a chemical agent 111 (see Fig. 1) into a first aqueous solution 70 (see Fig. 1) and the amount of the $CO_2$ (carbon dioxide) generated by the electrolysis apparatus 200. The state acquisition unit 16 may acquire the induced amount of the chemical agent 111. The induced amount of the chemical agent 111 may be mass or volume of the chemical agent 111 induced into the first aqueous solution 70 per unit time.

The determination unit 12 may calculate the amount of the $CO_2$ (carbon dioxide) generated by the electrolysis apparatus 200 on a basis of the induced amount of the chemical agent 111 (see Fig. 1) acquired by the state acquisition unit 16 as well as a relationship between the induced amount of the chemical agent 111 and the amount of the $CO_2$ (carbon dioxide) generated with the running of the electrolysis apparatus 200. The provision unit 14 may provide the amount of the $CO_2$ (carbon dioxide) calculated by the determination unit 12. This allows the user of the operation support apparatus 100 to recognize the amount of the $CO_2$ (carbon dioxide) generated by the electrolysis apparatus 200.

Similarly, the storage unit 18 may store a relationship between each of a running status of the electrolysis apparatus 200 and a method for manufacturing brine treatment equipment, and the amount of the $CO_2$ (carbon dioxide). The brine treatment equipment may include a filter 114 and a resin tower 116. The state acquisition unit 16 may acquire the running status of the electrolysis apparatus 200 and the method for manufacturing the brine treatment equipment. The determination unit 12 may calculate the amount of the $CO_2$ (carbon dioxide) generated by the electrolysis apparatus 200 on a basis of the relationship between each of the running status of the electrolysis apparatus 200 and the method for manufacturing the brine treatment equipment acquired by the state acquisition unit 16, and the amount of the $CO_2$ (carbon dioxide). The provision unit 14 may provide the amount of the $CO_2$ (carbon dioxide) calculated by the determination unit 12.

The storage unit 18 may store relationships between respective states of pure water for regeneration or back washing of the resin tower 116, pure water for concentration adjustment of a caustic product, pure water for dilution of a third aqueous solution 81, and pure water as sealing water of a pump, and the amount of the $CO_2$ (carbon dioxide). The state acquisition unit 16 may acquire the respective states of the pure water for the regeneration or the back washing of the resin tower 116, the pure water for the concentration adjustment of the caustic product, the pure water for the dilution of the third aqueous solution 81, and the pure water as the sealing water of the pump. The determination unit 12 may calculate the amount of the $CO_2$ (carbon dioxide) generated by the electrolysis apparatus 200 on a basis of the relationships between the respective states acquired by the state acquisition unit 16 and the amount of the $CO_2$ (carbon dioxide). The provision unit 14 may provide the amount of the $CO_2$ (carbon dioxide) calculated by the determination unit 12.

The storage unit 18 may store a relationship between a state of vapor used to increase temperature in a heat exchanger 96 and the amount of the $CO_2$ (carbon dioxide). The state acquisition unit 16 may acquire the state of the vapor. The determination unit 12 may calculate the amount of the $CO_2$ (carbon dioxide) generated by the electrolysis apparatus 200 on a basis of the relationship between the state of the vapor acquired by the state acquisition unit 16 and the amount of the $CO_2$ (carbon dioxide). The provision unit 14 may provide the amount of the $CO_2$ (carbon dioxide) calculated by the determination unit 12.

When at least one of a first valve 66, a first valve 67, a second valve 68, or a third valve is an automatic valve, the storage unit 18 may store a relationship between a state of instrumentation air for controlling the automatic valve and the amount of the $CO_2$ (carbon dioxide). The state acquisition unit 16 may acquire the state of the instrumentation air. The determination unit 12 may calculate the amount of the $CO_2$ (carbon dioxide) generated by the electrolysis apparatus 200 on a basis of the relationship between the state of the instrumentation air acquired by the state acquisition unit 16 and the amount of the $CO_2$ (carbon dioxide). The provision unit 14 may provide the amount of the $CO_2$ (carbon dioxide) calculated by the determination unit 12.

The storage unit 18 may store a relationship between a state of compressed air for blowing off a $Cl_2$ (chlorine) component of brine used in an electrolyzer 90 and the amount of the $CO_2$ (carbon dioxide). The state acquisition unit 16 may acquire the state of the compressed air. The determination unit 12 may calculate the amount of the $CO_2$ (carbon dioxide) generated by the electrolysis apparatus 200 on a basis of the relationship between the state of the compressed air acquired by the state acquisition unit 16 and the amount of the $CO_2$ (carbon dioxide). The provision unit 14 may provide the amount of the $CO_2$ (carbon dioxide) calculated by the determination unit 12.

The first generated amount learning unit 25 produces a first generated amount inference model 140 (to be described later). The second generated amount learning unit 26 produces a second generated amount inference model 142 (to be described later). The third generated amount learning unit 27 produces a third generated amount inference model 143 (to be described later). The fourth generated amount learning unit 28 produces a fourth generated amount inference model 144 (to be described later).

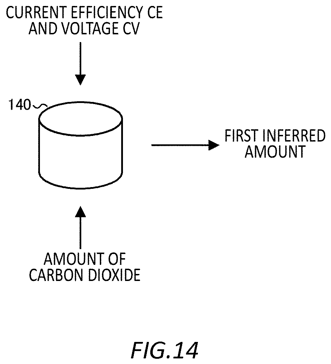

Fig. 14 illustrates an example of a first generated amount inference model 140. The first generated amount inference model 140 is a model which performs machine learning of a relationship between current efficiency CE and voltage CV, and an amount of $CO_2$ (carbon dioxide) generated by an electrolysis apparatus 200, thereby outputting a first inferred amount based on the current efficiency CE and the voltage CV as well as the generated amount of the $CO_2$ (carbon dioxide).

When a product produced by an electrolyzer 90 is NaOH (sodium hydroxide), an amount of power PC for producing NaOH (sodium hydroxide) per unit amount (for example, 1 ton) is expressed by the following expression. (Expression 2)

$$PC = \frac{CV \times 670}{CE \times 100} \qquad (2)$$

A generated amount of $CO_2$ (carbon dioxide) associated with running of the electrolysis apparatus 200 is proportional to the amount of the power PC. Therefore, the first generated amount inference model 140 can output the generated amount of the $CO_2$ (carbon dioxide) (that is, the first inferred amount) associated with the running of the electrolysis apparatus 200 on a basis of Expression 2.

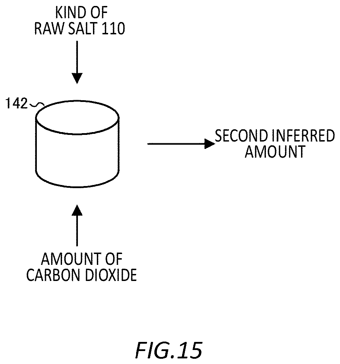

Fig. 15 illustrates an example of a second generated amount inference model 142. The second generated amount inference model 142 is a model which performs machine learning of a relationship between a kind of a raw salt 110 (see Fig. 1) and an amount of $CO_2$ (carbon dioxide) generated by an electrolysis apparatus 200, thereby outputting a second inferred amount based on the kind of the raw salt 110 and the amount of the $CO_2$ (carbon dioxide).

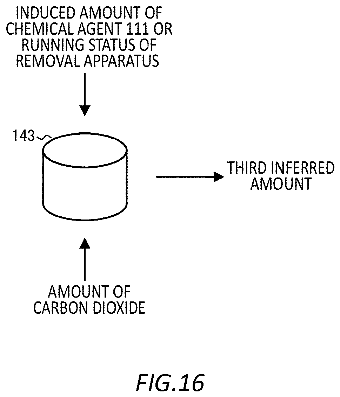

Fig. 16 illustrates an example of a third generated amount inference model 143. The third generated amount inference model 143 is a model which performs machine learning of a relationship between an induced amount of a chemical agent 111 (see Fig. 1) and an amount of $CO_2$ (carbon dioxide) generated by an electrolysis apparatus 200, thereby outputting a third inferred amount based on the induced amount of the chemical agent 111 and the amount of the $CO_2$ (carbon dioxide). The third generated amount inference model 143 may be a model which performs machine learning of a relationship between each of a running status of the electrolysis apparatus 200 and a method for manufacturing brine treatment equipment, and the amount of the $CO_2$ (carbon dioxide), thereby outputting a third inferred amount based on each of the running status of the electrolysis apparatus 200 and the method for manufacturing the brine treatment equipment as well as the amount of the $CO_2$ (carbon dioxide).

The third generated amount inference model 143 may be a model which performs machine learning of a relationship between a running status of a removal apparatus which removes an impurity that may degrade ion exchange performance of an ion exchange membrane and the amount of the $CO_2$ (carbon dioxide) generated by the electrolysis apparatus 200, thereby outputting a third inferred amount based on the running status of the removal apparatus and the amount of the $CO_2$ (carbon dioxide). The removal apparatus may include a filter 114 (see Fig. 1) and a resin tower 116 (see Fig. 1). The removal apparatus may include a desulfurization apparatus which desulfurizes a first aqueous solution 70 and a decomposition tank which decomposes a chlorate contained in the first aqueous solution 70.

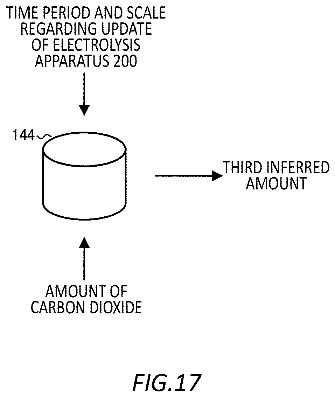

Fig. 17 illustrates an example of a fourth generated amount inference model 144. The fourth generated amount inference model 144 is a model which performs machine learning of a relationship between a time period and a scale regarding update of an electrolysis apparatus 200, and an amount of $CO_2$ (carbon dioxide) generated by the electrolysis apparatus 200, thereby outputting a fourth inferred amount based on the time period and the scale regarding the update of the electrolysis apparatus 200 as well as the amount of the $CO_2$ (carbon dioxide). The update of the electrolysis apparatus 200 may include refurbishment and revamp of the electrolysis apparatus 200.

A provision unit 14 (see Fig. 13) may provide at least one of a first inferred amount to the fourth inferred amount. This allows a user of an operation support apparatus 100 to recognize a more accurate amount of the $CO_2$ (carbon dioxide) generated by the electrolysis apparatus 200. It should be noted that a first generated amount inference model 140 to the fourth generated amount inference model 144 may be stored in a storage unit 18 (see Fig. 13).

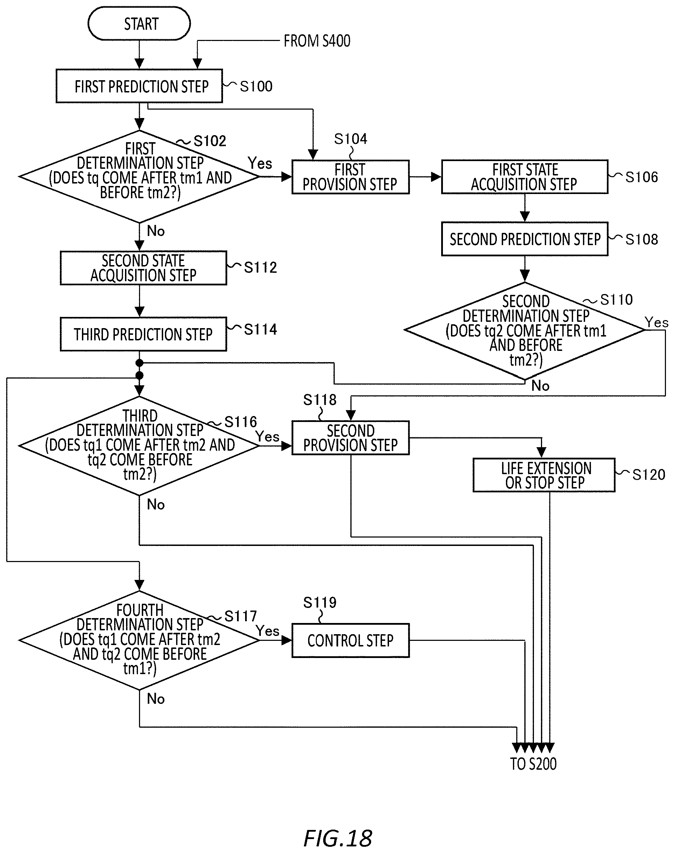

Fig. 18 is a first flowchart including an example of an operation support method according to one embodiment of the present invention. The operation support method according to one embodiment of the present invention is an operation support method in which an operation support apparatus 100 (see Fig. 5) supports operation of an electrolysis apparatus 200 (see Fig. 2). The operation support method includes a first prediction step S100 and a first provision step S104. The operation support method may include a first determination step S102.

The first prediction step S100 is a step in which a prediction unit 10 (see Fig. 5) predicts a maintenance recommended time tq (see Fig. 6) at which a target object 210 (see Fig. 5) in the electrolysis apparatus 200 is put into a maintenance recommended state Sn. The first determination step S102 is a step in which a determination unit 12 (see Fig. 5) determines a temporal relation between a first maintenance time tm1 (see Fig. 6) and the maintenance recommended time tq (see Fig. 6) as well as a temporal relation between a second maintenance time tm2 (see Fig. 6) and the maintenance recommended time tq.

The first provision step S104 is a step in which a provision unit 14 (see Fig. 5) provides information for recommending that maintenance of the target object 210 (see Fig. 5) should be performed at the first maintenance time tm1 if it is determined in the first determination step S102 that the maintenance recommended time tq (see Fig. 6) comes after the first maintenance time tm1 (see Fig. 6) and comes before the second maintenance time tm2 (see Fig. 6). This allows a user of the operation support apparatus 100 to recognize at a current time tp (see Fig. 6) that the target object 210 is expected to be not put into the maintenance recommended state Sn at the first maintenance time tm1 but to be put into the maintenance recommended state Sn before the second maintenance time tm2.

The information for recommending the maintenance of the target object 210 (see Fig. 5) may be information for recommending replacement of the target object 210, or may be information for recommending that a lifespan of the target object 210 should be measured. The provision unit 14 (see Fig. 5) may provide at the current time tp (see Fig. 6) the information for recommending the maintenance of the target object 210, may provide it at the first maintenance time tm1 (see Fig. 6), or may continuously provide it from the current time tp to the maintenance recommended time tq (see Fig. 6).

If it is not determined in the first determination step S102 that the maintenance recommended time tq (see Fig. 6) comes after the first maintenance time tm1 (see Fig. 6) and comes before the second maintenance time tm2 (see Fig. 6), the operation support method passes to a second state acquisition step S112. The second state acquisition step S112 will be described later.

As described above, the maintenance recommended state Sn and the maintenance time tr (see Fig. 6) may be predetermined. The first prediction step S100 may be a step in which the prediction unit 10 (see Fig. 5) predicts the first maintenance recommended time tq1 (see Fig. 7) at which the target object 210 (see Fig. 5) is put into the maintenance recommended state Sn, as the maintenance recommended time tq (see Fig. 6).

The operation support method may further include a first state acquisition step S106 and a second prediction step S108. The first state acquisition step S106 is a step in which a state acquisition unit 16 (see Fig. 5) acquires a state of the target object 210 (see Fig. 5) at the first maintenance time tm1 (see Fig. 7). The first state acquisition step S106 may be a step in which the user of the operation support apparatus 100 manually acquires a state S of the target object 210 for which it is difficult for the state acquisition unit 16 to acquire the state S and then the user inputs it to the operation support apparatus 100 with an input unit 22.

The second prediction step S108 is a step in which the prediction unit 10 (see Fig. 5) further predicts a second maintenance recommended time tq2 (see Fig. 7) at which the target object 210 is put into the maintenance recommended state Sn, as the maintenance time tr, on a basis of the state S of the target object 210 acquired in the first state acquisition step S106. The second prediction step S108 may be performed at the first maintenance time tm1 (see Fig. 7).

The operation support method may further include a second determination step S110 and a second provision step S118. The second determination step S110 is a step in which the determination unit 12 (see Fig. 5) determines a temporal relation between the first maintenance time tm1 (see Fig. 7) and the second maintenance recommended time tq2 (see Fig. 7) as well as a temporal relation between the second maintenance time tm2 (see Fig. 7) and the second maintenance recommended time tq2. The second provision step S118 is a step in which the provision unit 14 (see Fig. 5) provides information for recommending that the maintenance of the target object 210 should be performed at the first maintenance time tm1 if it is determined in the second determination step S110 that the second maintenance recommended time tq2 comes after the first maintenance time tm1 and before the second maintenance time tm2.

The operation support method may further include a second state acquisition step S112 and a third prediction step S114. The second state acquisition step S112 is a step in which the state acquisition unit 16 (see Fig. 5) acquires the state S of the target object 210 (see Fig. 5) while the electrolysis apparatus 200 (see Fig. 2) is running. The third prediction step S114 is a step in which the prediction unit 10 (see Fig. 5) further predict the second maintenance recommended time tq2 (see Fig. 7) on a basis of the state S of the target object 210 acquired in the second state acquisition step S112.

The operation support method may further include a third determination step S116 and a second provision step S118. The third determination step S116 is a step in which the determination unit 12 (see Fig. 5) determines a temporal relation between the second maintenance time tm2 and the first maintenance recommended time tq1 as well as a temporal relation between the second maintenance time tm2 and the second maintenance recommended time tq2. The second provision step S118 is a step in which the provision unit 14 (see Fig. 5) provides the information for recommending that the maintenance of the target object 210 should be performed at the first maintenance time tm1 if it is determined in the third determination step S116 that the first maintenance recommended time tq1 comes after the second maintenance time tm2 and the second maintenance recommended time tq2 comes before the second maintenance time tm2.

The operation support method may include a life extension or stop step S120. The life extension or stop step S120 is a step in which a time at which the target object 210 is put into an end of lifespan is postponed or a step in which running of the electrolysis apparatus 200 is stopped, as a result of a flow rate F1 of a first aqueous solution 70, a flow rate F2 of a second aqueous solution 72, temperature T1 of the first aqueous solution 70, temperature T2 of the second aqueous solution 72, or the like being controlled. The life extension or stop step S120 may be a step in which the second maintenance recommended time tq2 is postponed.

If it is not determined in the third determination step S116 that the first maintenance recommended time tq1 comes after the second maintenance time tm2 and the second maintenance recommended time tq2 comes before the second maintenance time tm2, the operation support method proceeds to a fifth determination step S200 (to be described later). The operation support method proceeds to the fifth determination step S200 (to be described later) after the second provision step S118. The operation support method proceeds to the fifth determination step S200 (to be described later) after the life extension or stop step S120.

The operation support method may further include a fourth determination step S117 and a control step S119. The fourth determination step S117 is a step in which the determination unit 12 (see Fig. 5) determines the temporal relation between the second maintenance time tm2 and the first maintenance recommended time tq1 as well as the temporal relation between the second maintenance time tm2 and the second maintenance recommended time tq2. The control step S119 is a step in which first valves 66 and first valves 67 (see Fig. 2) are controlled.

If, in the fourth determination step S117, it is determined that the first maintenance recommended time tq1 comes after the second maintenance time tm2, it is determined that the second maintenance recommended time tq2 comes before the first maintenance time tm1, and a concentration of a suspended matter or an organic matter detected by the detection unit 99 (see Fig. 1) is equal to or higher than a predetermined concentration, a control unit 20 (see Fig. 5) may delay the second maintenance recommended time tq2 until the first maintenance time tm1 by controlling at least one of the first valves 66, the first valves 67, the second valve 68, or the third valve 69 and controlling an added amount of a chemical agent 111 (see Fig. 1) in the control step S119.

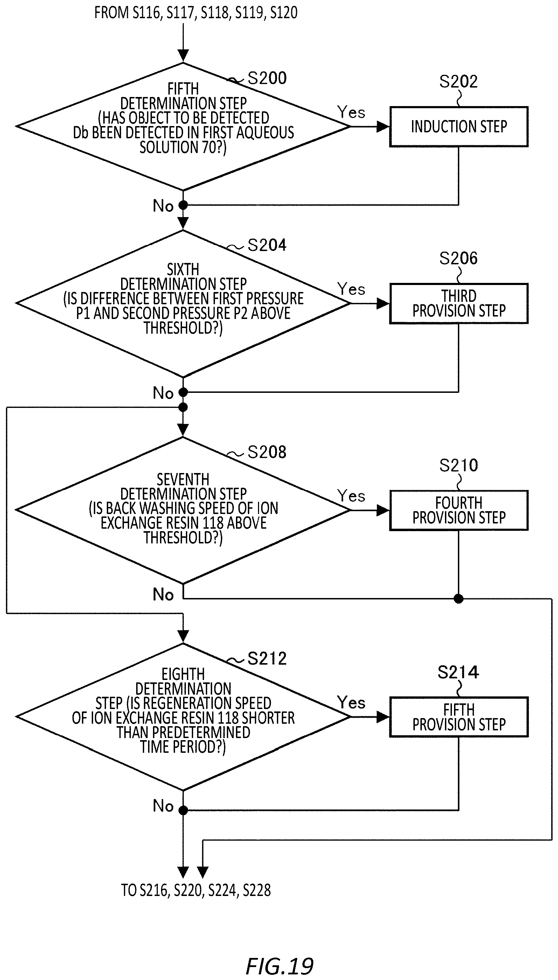

Fig. 19 is a second flowchart including an example of an operation support method according to one embodiment of the present invention. The operation support method according to one embodiment of the present invention is an operation support method in which an operation support apparatus 100 (see Fig. 5) supports operation of an electrolysis apparatus 200 (see Fig. 2). The operation support method may further include a fifth determination step S200, an induction step S202, a sixth determination step S204, a third provision step S206, a seventh determination step S208, a fourth provision step S210, an eighth determination step S212, and a fifth provision step S214.

The fifth determination step S200 is a step in which it is determined whether a detection unit 99 (see Fig. 3) has detected an object to be detected Db in a first aqueous solution 70. If it is determined in the fifth determination step S200 that the object to be detected Db has been detected, the operation support method proceeds to the induction step S202. The induction step S202 is a step in which a chemical agent 111 (see Fig. 1) is induced into the first aqueous solution 70. If it is determined in the fifth determination step S200 that the object to be detected has not been detected, the operation support method proceeds to the sixth determination step S204.

The sixth determination step S204 is a step in which a determination unit 12 (see Fig. 5) determines whether a difference between a first pressure P1 and a second pressure P2 is above a predetermined threshold difference. If it is determined in the sixth determination step S204 that the difference is above the threshold difference, the operation support method proceeds to the third provision step S206. If it is determined in the sixth determination step S204 that the difference is not above the threshold difference, the operation support method proceeds to the seventh determination step S208 or the eighth determination step S212.

The third provision step S206 may be a step in which a provision unit 14 (see Fig. 5) provides information for recommending update of a filter 114 (see Fig. 1). The update of the filter 114 may refer to removing an impurity Im accumulated on the filter 114, or may refer to replacement of the filter 114.

The seventh determination step S208 is a step in which the determination unit 12 (see Fig. 5) determines whether a back washing speed of an ion exchange resin 118 (see Fig. 1) is above a predetermined threshold back washing speed. If it is determined in the seventh determination step S208 that the back washing speed is above the threshold back washing speed, the operation support method proceeds to the fourth provision step S210. If it is not determined in the seventh determination step S208 that the back washing speed is above the threshold back washing speed, the operation support method proceeds to a ninth determination step S216 to a twelfth determination step S228 (to be described later).

The fourth provision step S210 may be a step in which the provision unit 14 (see Fig. 5) provides information for recommending update of the ion exchange resin 118 (see Fig. 1). The update of the ion exchange resin 118 may refer to removing the impurity Im accumulated on the ion exchange resin 118 by allowing pure water to flow, or may refer to replacement of the ion exchange resin 118.

The eighth determination step S212 is a step in which the determination unit 12 (see Fig. 5) determines whether a regeneration speed of the ion exchange resin 118 (see Fig. 1) is shorter than a predetermined time period. If it is determined in the eighth determination step S212 that the regeneration speed is shorter than the predetermined time period, the operation support method proceeds to the fifth provision step S214. If it is not determined in the eighth determination step S212 that the regeneration speed is shorter than the predetermined time period, the operation support method proceeds to the ninth determination step S216 to the twelfth determination step S228 (to be described later).

The fifth provision step S214 may be a step in which the provision unit 14 (see Fig. 5) provides information for recommending regeneration of the ion exchange resin 118 (see Fig. 1). The regeneration of the ion exchange resin 118 may include addition or replacement of the ion exchange resin 118.

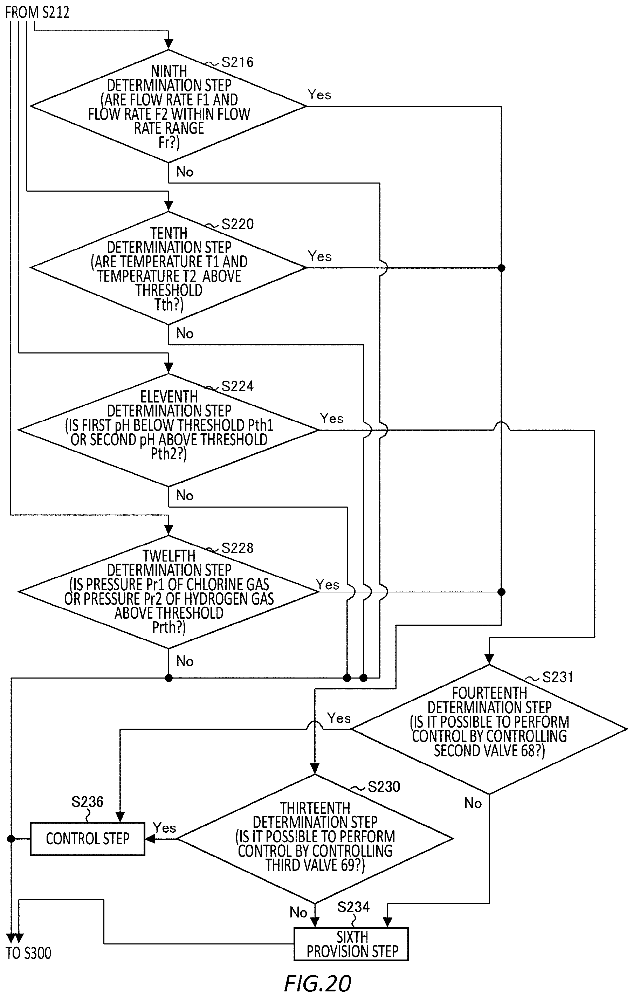

Fig. 20 is a third flowchart including an example of an operation support method according to one embodiment of the present invention. The operation support method according to one embodiment of the present invention is an operation support method in which an operation support apparatus 100 (see Fig. 5) supports operation of an electrolysis apparatus 200 (see Fig. 2). The operation support method may further include a ninth determination step S216, a tenth determination step S220, an eleventh determination step S224, a twelfth determination step S228, a thirteenth determination step S230, a sixth provision step S234, and a control step S236.

The ninth determination step S216 is a step in which a determination unit 12 (see Fig. 5) determines whether a flow rate F1 of a first aqueous solution 70 or a flow rate F2 of a second aqueous solution 72 is within a flow rate range Fr. If it is determined in the ninth determination step S216 that the flow rate F1 or the flow rate F2 is not within the flow rate range Fr, the operation support method passes to the thirteenth determination step S230 (to be described later). If it is determined in the ninth determination step S216 that the flow rate F1 or the flow rate F2 is within the flow rate range Fr, the operation support method passes to a fifteenth determination step S300 (to be described later).

The tenth determination step S220 is a step in which the determination unit 12 (see Fig. 5) determines whether temperature T1 of the first aqueous solution 70 or temperature T2 of the second aqueous solution 72 is above a threshold Tth. If it is determined in the tenth determination step S220 that the temperature T1 or the temperature T2 is above the threshold Tth, the operation support method passes to the thirteenth determination step S230 (to be described later). If it is determined in the tenth determination step S220 that the temperature T1 or the temperature T2 is not above the threshold Tth, the operation support method passes to the fifteenth determination step S300 (to be described later).

The eleventh determination step S224 is a step in which the determination unit 12 (see Fig. 5) determines whether a first pH of the first aqueous solution 70 is below a threshold Pth1 or whether a second pH of the second aqueous solution 72 is above a threshold Pth2. If it is determined in the eleventh determination step S220 that the first pH is below the threshold Pth1 or that the second pH is above the threshold Pth2, the operation support method passes to a thirteenth determination step S231 (to be described later). If it is determined in the eleventh determination step S220 that the first pH is below the threshold Pth1 or that the second pH is not above the threshold Pth2, the operation support method passes to the fifteenth determination step S300 (to be described later).

The twelfth determination step S228 is a step in which the determination unit 12 (see Fig. 5) determines whether pressure Pr1 of a chlorine gas ($Cl_2$) in an anode chamber 79 (see Fig. 3) and pressure Pr2 of a hydrogen gas ($H_2$) in a cathode chamber 98 (see Fig. 3) are above a threshold Prth. If it is determined in the twelfth determination step S228 that the pressure Pr1 and the pressure Pr2 are above the threshold Prth, the operation support method passes to the thirteenth determination step S230 (to be described later). If it is determined in the twelfth determination step S228 that the pressure Pr1 and the pressure Pr2 are not above the threshold Prth, the operation support method passes to the fifteenth determination step S300 (to be described later).

The thirteenth determination step S230 may be a step in which the determination unit 12 (see Fig. 5) determines whether the flow rate F1 and the flow rate F2 can be controlled to be within the flow rate range Fr by controlling first valves 66 and first valves 67 (see Fig. 2). If it is determined in the thirteenth determination step S230 that the flow rate F1 and the flow rate F2 can be controlled to be within the flow rate range Fr, the operation support method passes to the control step S236. If it is determined in the thirteenth determination step S230 that the flow rate F1 and the flow rate F2 cannot be controlled to be equal to or lower than the flow rate range Fr, the operation support method passes to the sixth provision step S234.

The thirteenth determination step S230 may be a step in which the determination unit 12 (see Fig. 5) determines whether the temperature T1 and the temperature T2 can be controlled to be equal to or lower than the threshold Tth by controlling a third valve 69 (see Fig. 12). The third valve 69 may switch between a fourth aqueous solution 76 being and not being supplied to a heat exchanger 96 (see Fig. 12). If it is determined in the thirteenth determination step S230 that the temperature T1 and the temperature T2 can be controlled to be equal to or lower than the threshold Tth, the operation support method passes to the control step S236. If it is determined in the thirteenth determination step S230 that the temperature T1 and the temperature T2 cannot be controlled to be equal to or lower than the threshold Tth, the operation support method passes to the sixth provision step S234.

The thirteenth determination step S230 may be a step in which the determination unit 12 (see Fig. 5) determines whether the pressure Pr1 and the pressure Pr2 can be controlled to be equal to or lower than the threshold Prth by controlling the first valves 66 and the first valves 67 (see Fig. 2). If it is determined in the thirteenth determination step S230 that the pressure Pr1 and the pressure Pr2 can be controlled to be equal to or lower than the threshold Prth, the operation support method passes to the control step S236. If it is determined in the thirteenth determination step S230 that the pressure Pr1 and the pressure Pr2 cannot be controlled to be equal to or lower than the threshold Prth, the operation support method passes to the sixth provision step S234.

The fourteenth determination step S231 may be a step in which the determination unit 12 (see Fig. 5) determines whether the first pH can be controlled to be equal to or higher than the threshold Pth1 and whether the second pH can be controlled to be equal to or lower than the threshold Pth2 by controlling the second valve 68 (see Fig. 12). If it is determined in the fourteenth determination step S231 that the first pH can be controlled to be equal to or higher than the threshold Pth1 and that the second pH can be controlled to be equal to or lower than the threshold Pth2, the operation support method passes to the control step S236. If it is not determined in the fourteenth determination step S231 that the first pH can be controlled to be equal to or higher than the threshold Pth1 and that the second pH can be controlled to be equal to or lower than the threshold Pth2, the operation support method passes to the sixth provision step S234.

The control step S236 may be a step of controlling the flow rate F1 and the flow rate F2 to be equal to or lower than the flow rate range Fr by controlling the first valves 66 and the first valves 67 (see Fig. 2). The control step S236 may be a step of controlling the temperature T1 and the temperature T2 to be equal to or lower than the threshold Tth by controlling the first valves 66 and the first valves 67 (see Fig. 2). The control step S236 may be a step of controlling the first pH to be equal to or higher than the threshold Pth1 and controlling the second pH to be equal to or lower than the threshold Pth2 by controlling the second valve 68 (see Fig. 12). The control step S236 may be a step of controlling the pressure Pr1 and the pressure Pr2 to be equal to or lower than the threshold Prth by controlling the first valves 66 and the first valves 67 (see Fig.

2). In the control step S232, a user of the operation support apparatus 100 may control the first valves 66 and the first valves 67. The operation support method passes to the fifteenth determination step S300 (to be described later) after the control step S236.

The sixth provision step S234 may be a step in which a provision unit 14 (see Fig. 5) provides information for recommending repair or replacement of first induction piping 92 and second induction piping 93 (see Fig. 2). The sixth provision step S234 may be a step in which the provision unit 14 provides information for recommending maintenance of the anode chamber 79 (see Fig. 3) and the cathode chamber 98 (see Fig. 3). The sixth provision step S234 may be a step in which the provision unit 14 provides information for recommending repair or replacement of third induction piping 97 and the second valve 68. The sixth provision step S234 may be a step in which the provision unit 14 provides information for recommending repair or replacement of fourth induction piping 102 and the third valve 69. The operation support method passes to the fifteenth determination step S300 (to be described later) after the sixth provision step S234.

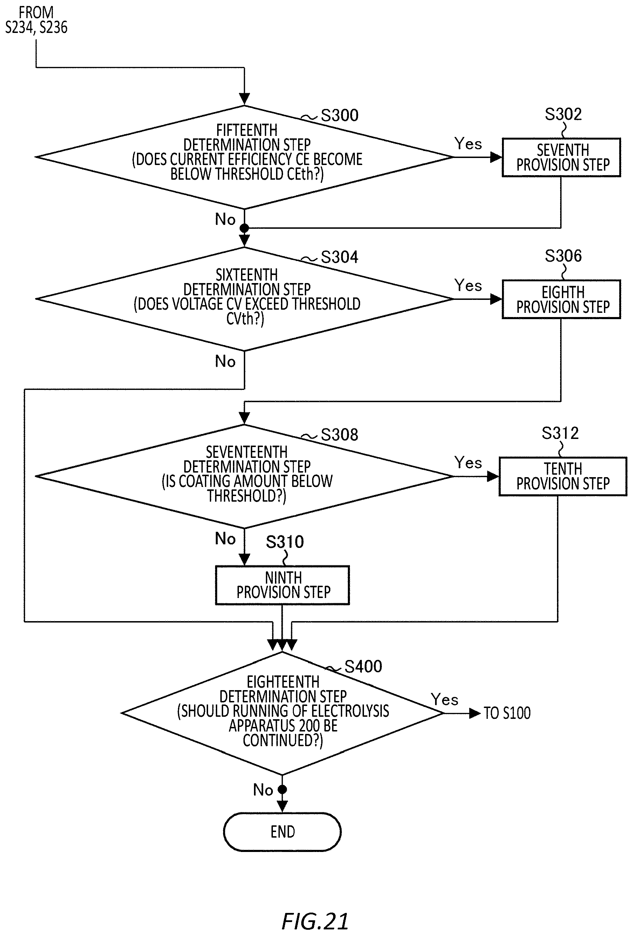

Fig. 21 is a fourth flowchart including an example of an operation support method according to one embodiment of the present invention. The operation support method according to one embodiment of the present invention is an operation support method in which an operation support apparatus 100 (see Fig. 5) supports operation of an electrolysis apparatus 200 (see Fig. 2). The operation support method may further include a fifteenth determination step S300, a seventh provision step S302, a sixteenth determination step S304, an eighth provision step S306, a seventeenth determination step S308, a ninth provision step S310, and a tenth provision step S312.

The fifteenth determination step S300 is a step in which a determination unit 12 (see Fig. 3) determines whether current efficiency CE becomes below a threshold CEth. If it is determined that the current efficiency CE becomes below the threshold CEth, the operation support method proceeds to the seventh provision step S302. If it is determined that the current efficiency CE becomes equal to or higher than the threshold CEth, the operation support method passes to the sixteenth determination step S304.

The seventh provision step S302 is a step in which a provision unit 14 (see Fig. 5) provides information for recommending that an ion exchange membrane 84 (see Fig. 3) should be updated at a first maintenance time tm1 (see Fig. 6). The operation support method proceeds to the sixteenth determination step S304 after the seventh provision step S302.

The sixteenth determination step S304 is a step in which the determination unit 12 (see Fig. 3) determines whether voltage CV exceeds a threshold CVth. If it is determined that the voltage CV exceeds the threshold CVth, the operation support method proceeds to the eighth provision step S306. The eighth provision step S306 is a step in which the provision unit 14 (see Fig. 5) provides information for recommending that at least one of the ion exchange membrane 84, an anode 80, or a cathode 82 (see Fig. 3) should be updated at the first maintenance time tm1 (see Fig. 6). If it is determined that the voltage CV becomes equal to or lower than the threshold CVth, the operation support method returns to a first prediction step S100.

The seventeenth determination step S308 is a step in which the determination unit 12 (see Fig. 3) determines whether a coating amount of metal such as Ru with which surfaces of the anode 80 and the cathode 82 are coated is below a threshold Ath. If it is determined that the coating amount is equal to or greater than the threshold Ath, the operation support method passes to the ninth provision step S310,
If it is determined that the coating amount is below the threshold Ath, the operation support method passes to the tenth provision step S312,

The ninth provision step S310 is a step in which the provision unit 14 (see Fig. 5) provides information for recommending that the ion exchange membrane 84 (see Fig. 3) should be updated at a second maintenance time tm2 (see Figs. 6 to 11). The operation support method passes to an eighteenth determination step S400 after the ninth provision step S310.

The tenth provision step S312 is a step in which the provision unit 14 (see Fig. 5) provides information for recommending that at least one of the anode 80 or the cathode 82 (see Fig. 3) should be updated at the second maintenance time tm2 (see Figs. 6 to 11). The operation support method passes to the eighteenth determination step S400 after the tenth provision step S312. It returns to the first prediction step S100.

The eighteenth determination step S400 is a step in which the determination unit 12 determines whether running of the electrolysis apparatus 200 should be continued. If it is determined by the determination unit 12 that the running of the electrolysis apparatus 200 should be continued, the operation support method returns to the first prediction step S100. If it is determined by the determination unit 12 that the running of the electrolysis apparatus 200 should not be continued, the operation support method ends support for the operation of the electrolysis apparatus 200.

Various embodiments of the present invention may be described with reference to flowcharts and block diagrams. According to the various embodiments of the present invention, a block may represent (1) a stage of a process in which an operation is performed or (2) a section of an apparatus having a role for performing an operation.

A specific stage may be performed by a dedicated circuit, a programmable circuit, or a processor. A specific section may be implemented by a dedicated circuit, a programmable circuit, or a processor. The programmable circuit and the processor may be supplied together with a computer readable instruction. The computer readable instruction may be stored on a computer readable medium.

The dedicated circuit may include at least one of a digital hardware circuit or an analog hardware circuit. The dedicated circuit may include at least one of an integrated circuit (IC) or a discrete circuit. The programmable circuit may include a hardware circuit for logical AND, logical OR, logical XOR, logical NAND, logical NOR, or another logical operation. The programmable circuit may include a reconfigurable hardware circuit including a flip-flop, a register, a memory element such as a field programmable gate array (FPGA) or a programmable logic array (PLA), or the like.

Computer readable medium may include any tangible device that can store an instruction performed by an appropriate device. The computer readable medium includes the tangible device, so that the computer readable medium having the instruction stored on the device will include a product including an instruction that may be performed in order to create a means to perform an operation designated in a flowchart or a block diagram.

The computer readable medium may be, for example, an electronic storage medium, a magnetic storage medium, an optical storage medium, an electromagnetic storage medium, a semiconductor storage medium, or the like. More specifically, the computer readable medium may be, for example, a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer readable instruction may include any of an assembler instruction, an instruction-set-architecture (ISA) instruction, a machine instruction, a machine dependent instruction, a microcode, a firmware instruction, state-setting data, a source code, or an object code. The source code and the object code may be described in any combination of one or more programming languages including an object oriented programming language and a conventional procedural programming language. The object oriented programming language may be, for example, Smalltalk (registered trademark), JAVA (registered trademark), C++, or the like. The procedural programming language may be, for example, a "C" programming language.

The computer readable instruction may be provided to a processor or a programmable circuit of a general purpose computer, a special purpose computer, or another programmable data processing apparatus locally or via a local area network (LAN) or a wide area network (WAN) such as the Internet or the like. The processor or the programmable circuit of the general purpose computer, the special purpose computer, or another programmable data processing apparatus may perform a computer readable instruction in order to create a means to perform an operation designated in the flowcharts shown in Fig. 6 to Fig. 9 or the block diagrams shown in Fig. 5 and Fig. 13. The processor may be, for example, a computer processor, a processing unit, a microprocessor, a digital signal processor, a controller, a microcontroller, or the like.

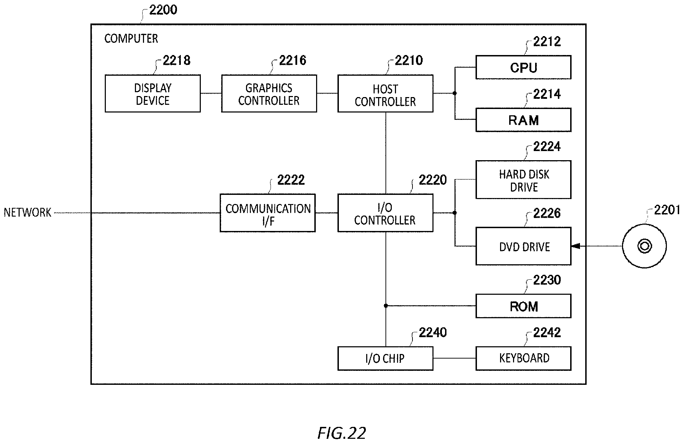

Fig. 22 illustrates an example of a computer 2200 in which an operation support apparatus 100 according to one embodiment of the present invention may be entirely or partially embodied. A program installed on the computer 2200 can cause the computer 2200 to function as an operation associated with the operation support apparatus 100 according to an embodiment of the present invention or one or more sections of the operation support apparatus 100, or can cause it to perform the operation or the one or more sections, or can cause the computer 2200 to perform each step (see Fig. 6 to Fig. 9) according to an analysis method of the present invention. The program may be performed by a CPU 2212 in order to cause the computer 2200 to perform a specific operation associated with some or all of the blocks in the flowcharts (Fig. 6 to Fig. 9) and the block diagrams (Fig. 5 and Fig. 13) described in the present specification.

The computer 2200 according to the present embodiment includes a CPU 2212, a RAM 2214, a graphics controller 2216, and a display device 2218. The CPU 2212, the RAM 2214, the graphics controller 2216, and the display device 2218 are mutually connected by a host controller 2210. The computer 2200 further includes input/output units such as a communication interface 2222, a hard disk drive 2224, a DVD-ROM drive 2226, and an IC card drive. The communication interface 2222, the hard disk drive 2224, the DVD-ROM drive 2226, the IC card drive, and the like are connected to the host controller 2210 via an input/output controller 2220. The computer further includes legacy input/output units such as a ROM 2230 and a keyboard 2242. The ROM 2230, the keyboard 2242, and the like are connected to the input/output controller 2220 via an input/output chip 2240.

The CPU 2212 operates according to programs stored in the ROM 2230 and the RAM 2214, thereby controlling each unit. The graphics controller 2216 acquires image data produced by the CPU 2212 on a frame buffer or the like provided in the RAM 2214 or in the RAM 2214 itself, thereby causing the image data to be displayed on the display device 2218.

The communication interface 2222 communicates with another electronic device via a network. The hard disk drive 2224 stores a program and data used by the CPU 2212 in the computer 2200. The DVD-ROM drive 2226 reads a program or data from the DVD-ROM 2201, and provides the read program or data to the hard disk drive 2224 via the RAM 2214. The IC card drive reads a program and data from an IC card, or writes a program and data to an IC card.

The ROM 2230 stores a boot program or the like performed by the computer 2200 at the time of activation, or a program depending on the hardware of the computer 2200. The input/output chip 2240 may connect various input/output units to the input/output controller 2220 via a parallel port, a serial port, a keyboard port, a mouse port, or the like.

Programs are provided by a computer readable medium such as the DVD-ROM 2201 or the IC card. The programs are read from a computer readable medium, are installed in the hard disk drive 2224, the RAM 2214, or the ROM 2230 which is also an example of the computer readable medium, and are performed by the CPU 2212. Information processing described in these programs is read by the computer 2200, and provides cooperation between the programs and the various types of hardware resources described above. An apparatus or a method may be constituted by achieving an operation or processing of information in accordance with usage of the computer 2200.

For example, when communication is performed between the computer 2200 and an external device, the CPU 2212 may perform a communication program loaded onto the RAM 2214, and instruct, on a basis of processing described in the communication program, the communication interface 2222 to perform communication processing. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

The CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, or the like. The CPU 2212 may perform various types of processing on the data on the RAM 2214. The CPU 2212 may next write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, information processing, condition judging, conditional branch, unconditional branch, search or replacement of information, or the like, as described in the present disclosure and designated by an instruction sequence of programs. The CPU 2212 may write back a result to the RAM 2214.

The CPU 2212 may search for information in a file, a database, or the like in the recording medium. For example, when a plurality of entries, each having an attribute value of a first attribute associated with an attribute value of a second attribute, are stored in the recording medium, the CPU 2212 may search for an entry matching the condition for which the attribute value of the first attribute is designated, from among the plurality of entries, read the attribute value of the second attribute stored in the entry, and read a second attribute value to acquire the attribute value of the second attribute associated with the first attribute satisfying a predetermined condition.

The program or software modules described above may be stored on the computer 2200 or in the computer readable medium of the computer 2200. A recording medium such as a hard disk or a RAM provided in a server system connected to a dedicated communication network or the Internet can be used as the computer readable medium. The program may be provided to the computer 2200 by the recording medium.

While the present invention has been described by way of the embodiments, the technical scope of the present invention is not limited to the above described embodiments. It is apparent to persons skilled in the art that various alterations or improvements can be made to the above described embodiments. It is apparent from the description of the claims that embodiments added with such alterations or improvements are within the technical scope of the present invention as described by the appended claims.

Note that the operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

EXPLANATION OF REFERENCES

10: prediction unit, 12: determination unit, 14: provision unit, 16: state acquisition unit, 18: storage unit, 20: control unit, 22: input unit, 25: first generated amount learning unit, 26: second generated amount learning unit, 27: third generated amount learning unit, 28: fourth generated amount learning unit, 66: first valve, 67: first valve, 68: second valve, 69: third valve, 70: first aqueous solution, 71: cation, 72: second aqueous solution, 73: liquid, 74: liquid, 75: liquid, 76: fourth aqueous solution, 77: gas, 78: gas, 79: anode chamber, 80: anode, 81: third aqueous solution, 82: cathode, 84: ion exchange membrane, 86: anion group, 90: electrolyzer, 91: electrolysis cell, 92: first induction piping, 93: second induction piping, 94: first discharge piping, 95: second discharge piping, 96: heat exchanger, 97: third induction piping, 98: cathode chamber, 99: detection unit, 100: operation support apparatus, 102: fourth induction piping, 110: raw salt, 111: chemical agent, 112: sedimentation and separation tank, 113: raw salt dissolution layer, 114: filter, 116: resin tower, 117: impurity sensor, 118: ion exchange resin, 119: flow rate sensor, 122: first pressure sensor, 123: pressure sensor, 130: flow rate sensor, 132: second pressure sensor, 134: temperature sensor, 135: temperature sensor, 136: pH sensor, 140: first generated amount inference model, 142: second generated amount inference model, 143: third generated amount inference model, 144: fourth generated amount inference model, 200: electrolysis apparatus, 210: target object, 2200: computer, 2201: DVD-ROM, 2210: host controller, 2212: CPU, 2214: RAM, 2216:graphics controller, 2218: display device, 2220: input/output controller, 2222: communication interface, 2224: hard disk drive, 2226: DVD-ROM drive, 2230: ROM, 2240: input/output chip, 2242: keyboard.

**Claims**

1. An operation support apparatus comprising:

   a prediction unit (10) which predicts a maintenance recommended time at which a target object in an electrolysis apparatus (200) is put into a maintenance recommended state; and
   a provision unit (14) which provides information for recommending that maintenance of the target object should be performed at a first maintenance time,
   **characterized in that** the operation support apparatus further comprises a determination unit (12) which determines a temporal relation between a predetermined first maintenance time at which the target object can be maintained and the maintenance recommended time as well as a temporal relation between a predetermined second maintenance time at which the target object can be maintained and the maintenance recommended time, wherein the second maintenance time comes after the first maintenance time, wherein when it is determined by the determination unit (12) that the maintenance recommended time comes after the first maintenance time and comes before the second maintenance time, the provision unit (14) provides the information for recommending that the maintenance of the target object should be performed at the first maintenance time,
   wherein
   the prediction unit (10) predicts a first maintenance recommended time at which the target object is put into the maintenance recommended state, as the maintenance recommended time,
   further comprising a state acquisition unit (16) which acquires a state of the target object,
   wherein
   the prediction unit (16) further predicts a second maintenance recommended time at which the target object is put into the maintenance recommended state, as the maintenance recommended time, on a basis of the state of the target object acquired by the state acquisition unit, and wherein
   the electrolysis apparatus (200) has an electrolyzer (90),
   the electrolyzer (90) includes an ion exchange membrane (84) as well as an anode chamber (79) and a cathode chamber (98) separated by the ion exchange membrane (84),
   a first aqueous solution, which is an aqueous solution of an alkali metal chloride, is induced into the anode chamber (79),
   the electrolysis apparatus (200) is provided with a detection unit (99) which detects at least one of an ion of an alkali earth metal, an aluminum ion, a nickel ion, an iron ion, an iodine ion, silicon, a sulfate ion, a suspended matter, or an organic matter contained in the first aqueous solution, and
   when the detection unit (99) detects at least one of an ion of an alkali earth metal, an aluminum ion, a nickel ion, an iron ion, an iodine ion, silicon, a sulfate ion, a suspended matter, or an organic matter with a concentration equal to or higher than a predetermined concentration in the first aqueous solution, the determination unit (12) determines that a chemical agent which precipitates at least one of the suspended matter or the organic matter is induced into or increased in the first aqueous solution.

2. The operation support apparatus according to claim 1, wherein the state acquisition unit (16) acquires the state of the target object at the first maintenance time.

3. The operation support apparatus according to claim 2, wherein when it is determined by the determination unit (12) that the first maintenance recommended time comes after the first maintenance time and before the second maintenance time, the state acquisition unit (16) measures the state of the target object at the first maintenance time, and the prediction unit (10) predicts the second maintenance recommended time at the first maintenance time.

4. The operation support apparatus according to any one of claims 1 to 3, wherein when the determination unit (12) determines that the first maintenance recommended time comes after the second maintenance time and determines that the second maintenance recommended time comes after the first maintenance time and before the second maintenance time, the provision unit (14) provides the information for recommending that the maintenance of the target object should be performed at the first maintenance time.

5. The operation support apparatus according to any one of claims 1 to 3, wherein when the determination unit (12) determines that the first maintenance recommended time comes after the second maintenance time and determines that the second maintenance recommended time comes before the first maintenance time, a control unit (20) delays the second maintenance recommended time until the first maintenance time.

6. The operation support apparatus according to claim 1, wherein

the electrolysis apparatus (200) is provided with a filter (114) and a first pressure sensor (122) which measures pressure of the first aqueous solution,
at least part of the suspended matter contained in the first aqueous solution is removed by passing through the filter (114),
the first pressure sensor (122) measures a first pressure of the first aqueous solution which has not yet passed through the filter and a second pressure of the first aqueous solution which has passed through the filter (114),
the determination unit (12) determines whether a difference between the first pressure and the second pressure is above a predetermined threshold difference, and
when the determination unit (12) determines that the difference is above the threshold difference, the provision unit (14) provides information for recommending update of the filter (114).

7. The operation support apparatus according to claim 6, wherein

The electrolysis apparatus (200) is provided with an ion exchange resin (118) which removes at least part of the alkali earth metal contained in the first aqueous solution, and
When it is determined by the determination unit (12) that a back washing speed of the ion exchange resin (118) is above a predetermined threshold back washing speed, the provision unit (14) provides information for recommending update of the ion exchange resin (118).

8. The operation support apparatus according to claim 6, wherein

the electrolysis apparatus (200) is provided with an ion exchange resin (118) which removes at least part of the alkali earth metal contained in the first aqueous solution, and
when it is determined by the determination unit (12) that a regeneration speed of the ion exchange resin (118) is shorter than a predetermined time period, the provision unit (14) provides information indicating that update of the ion exchange resin (118) is recommended.

9. An operation support method comprising:

first predicting, by a prediction unit (10), a maintenance recommended time at which a target object in an electrolysis apparatus (200) is put into a maintenance recommended state; and
first providing, by a provision unit (14), information for recommending that maintenance of the target object should be performed at a first maintenance time, **characterized in that** the operation support method further comprises first determining, by a determination unit (12), a temporal relation between a predetermined first maintenance time at which the target object can be maintained and the maintenance recommended time as well as a temporal relation between a predetermined second maintenance time at which the target object can be maintained and the maintenance recommended time, wherein the second maintenance time comes after the first maintenance time, wherein
performing the first providing is providing, by the provision unit (14), the information for recommending that the maintenance of the target object should be performed at the first maintenance time, when it is determined, in performing the first determining, that the maintenance recommended time comes after the first maintenance time and comes before the second maintenance time, wherein
the first predicting includes predicting, by the prediction unit (10), a first maintenance recommended time at which the target object is put into the maintenance recommended state, as the maintenance recommended time,

acquiring, by a state acquisition unit (16), acquires a state of the target object,
predicting, by the prediction unit (16), a second maintenance recommended time at which the target object is put into the maintenance recommended state, as the maintenance recommended time, on a basis of the state of the target object acquired by the state acquisition unit,

detecting, by a detection unit (99) provided at the electrolysis apparatus (200), at least one of an ion of an alkali earth metal, an aluminum ion, a nickel ion, an iron ion, an iodine ion, silicon, a sulfate ion, a suspended matter, or an organic matter contained in the first aqueous solution, and
when the detection unit (99) detects at least one of an ion of an alkali earth metal, an aluminum ion, a nickel ion, an iron ion, an iodine ion, silicon, a sulfate ion, a suspended matter, or an organic matter with a concentration equal to or higher than a predetermined concentration in the first aqueous solution, determining, by the determination unit (12), that a chemical agent which precipitates at least one of the suspended matter or the organic matter is induced into or increased in the first aqueous solution.

10. An operation support program that causes a computer to perform the operation support method according to claim 9.

**Patentansprüche**

1. Betriebsunterstützungseinrichtung umfassend:

eine Vorhersageeinheit (10), die einen empfohlenen Wartungszeitpunkt vorhersagt, zu dem ein Zielobjekt in einer Elektrolyse-Einrichtung (200) in einen empfohlenen Wartungszustand versetzt wird; und
eine Bereitstellungseinheit (14), die Informationen bereitstellt, um zu empfehlen, dass die Wartung des Zielobjekts zu einem ersten Wartungszeitpunkt durchgeführt werden sollte,
**dadurch gekennzeichnet, dass** die Betriebsunterstützungseinrichtung weiter eine Bestimmungseinheit (12) umfasst, die eine zeitliche Beziehung zwischen einer vorbestimmten ersten Wartungszeit, zu der das Zielobjekt gewartet werden kann, und der empfohlenen Wartungszeit sowie eine zeitliche Beziehung zwischen einer vorbestimmten zweiten Wartungszeit, zu der das Zielobjekt gewartet werden kann, und der empfohlenen Wartungszeit bestimmt, wobei die zweite Wartungszeit nach der ersten Wartungszeit liegt, wobei
wenn durch die Bestimmungseinheit (12) bestimmt wird, dass der empfohlene Wartungszeitpunkt nach dem ersten Wartungszeitpunkt und vor dem zweiten Wartungszeitpunkt liegt, die Bereitstellungseinheit (14) die Informationen bereitstellt, um zu empfehlen, dass die Wartung des Zielobjekts zum ersten Wartungszeitpunkt durchgeführt werden sollte, wobei
die Vorhersageeinheit (10) einen ersten empfohlenen Wartungszeitpunkt voraussagt, zu dem das Zielobjekt in den empfohlenen Wartungszustand versetzt wird, als empfohlenen Wartungszeitpunkt,
weiter umfassend eine Zustandserfassungseinheit (16), die einen Zustand des Zielobjekts erfasst, wobei
die Vorhersageeinheit (16) weiter einen zweiten empfohlenen Wartungszeitpunkt vorhersagt, zu dem das Zielobjekt in den empfohlenen Wartungszustand versetzt wird, als den empfohlenen Wartungszeitpunkt, auf der Grundlage des von der Zustandserfassungseinheit erfassten Zustands des Zielobjekts, und wobei
die Elektrolyse-Einrichtung (200) über einen Elektrolyseur (90) verfügt,
der Elektrolyseur (90) eine Ionenaustauschmembran (84) sowie eine Anodenkammer (79) und eine Kathodenkammer (98) einschließt, die durch die Ionenaustauschmembran (84) voneinander getrennt sind,
eine erste wässrige Lösung, bei der es sich um eine wässrige Lösung eines Alkalimetallchlorids handelt, in die Anodenkammer (79) eingeleitet wird,
die Elektrolyse-Einrichtung (200) mit einer Detektionseinheit (99) versehen ist, die mindestens eines von einem Ion eines Erdalkalimetalls, einem Aluminiumion, einem Nickelion, einem Eisenion, einem Jodion, Silizium, einer Sulfation, einem Schwebstoff oder einem in der ersten wässrigen Lösung enthaltenen organischen Stoff detektiert, und
wenn die Detektionseinheit (99) mindestens eines von einem Ion eines Erdalkalimetalls, einem Aluminiumion, einem Nickelion, einem Eisenion, einem Jodion, Silizium, ein Sulfation, einen Schwebstoff oder einen organischen Stoff mit einer Konzentration, die gleich oder höher als eine vorbestimmte Konzentration in der ersten wässrigen Lösung ist, erfasst, die Bestimmungseinheit (12) bestimmt, dass ein chemisches Mittel, das mindestens einen der Schwebstoffe oder den organischen Stoff ausfällt, in die erste wässrige Lösung eingebracht oder darin erhöht wird.

2. Betriebsunterstützungseinrichtung nach Anspruch 1, wobei die Zustandserfassungseinheit (16) den Zustand des Zielobjekts zum ersten Wartungszeitpunkt erfasst.

3. Betriebsunterstützungseinrichtung nach Anspruch 2, wobei, wenn durch die Bestimmungseinheit (12) bestimmt wird, dass der erste empfohlene Wartungszeitpunkt nach dem ersten Wartungszeitpunkt und vor dem zweiten Wartungszeitpunkt liegt, die Zustandserfassungseinheit (16) den Zustand des Zielobjekts zum ersten Wartungszeitpunkt misst, und die Vorhersageeinheit (10) den zweiten empfohlenen Wartungszeitpunkt zum ersten Wartungszeitpunkt voraussagt.

4. Betriebsunterstützungseinrichtung nach einem der Ansprüche 1 bis 3, wobei, wenn die Bestimmungseinheit (12) bestimmt, dass der erste empfohlene Wartungszeitpunkt nach dem zweiten Wartungszeitpunkt liegt, und bestimmt, dass der zweite empfohlene Wartungszeitpunkt nach dem ersten Wartungszeitpunkt und vor dem zweiten Wartungszeitpunkt liegt, die Bereitstellungseinheit (14) die Informationen bereitstellt, um zu empfehlen, dass die Wartung des Zielobjekts zum ersten Wartungszeitpunkt durchgeführt werden sollte.

5. Betriebsunterstützungseinrichtung nach einem der Ansprüche 1 bis 3, wobei, wenn die Bestimmungseinheit (12) bestimmt, dass der erste empfohlene Wartungszeitpunkt nach dem zweiten Wartungszeitpunkt liegt, und bestimmt, dass der zweite empfohlene Wartungszeitpunkt vor dem ersten Wartungszeitpunkt liegt, eine Steuereinheit (20) den zweiten empfohlenen Wartungszeitpunkt bis zum ersten Wartungszeitpunkt verzögert.

6. Betriebsunterstützungseinrichtung nach Anspruch 1, wobei

die Elektrolyse-Einrichtung (200) mit einem Filter (114) und einem ersten Drucksensor (122) ausgestattet ist, der den Druck der ersten wässrigen Lösung misst,
zumindest ein Teil der in der ersten wässrigen Lösung enthaltenen suspendierten Stoffe durch Durchlaufen des Filters (114) entfernt wird,
der erste Drucksensor (122) einen ersten Druck der ersten wässrigen Lösung misst, die noch nicht durch den Filter hindurchgeflossen ist, und einen zweiten Druck der ersten wässrigen Lösung, die durch den Filter (114) hindurchgeflossen ist,
die Bestimmungseinheit (12) bestimmt, ob eine Differenz zwischen dem ersten Druck und dem zweiten Druck über einer vorbestimmten Schwellenwertdifferenz liegt, und
wenn die Bestimmungseinheit (12) bestimmt, dass die Differenz über der Schwellenwertdifferenz liegt, die Bereitstellungseinheit (14) Informationen zur Empfehlung einer Aktualisierung des Filters (114) bereitstellt.

7. Betriebsunterstützungseinrichtung nach Anspruch 6, wobei

Die Elektrolyse-Einrichtung (200) mit einem Ionenaustauschharz (118) versehen ist, das zumindest einen Teil des in der ersten wässrigen Lösung enthaltenen Erdalkalimetalls entfernt, und
wenn die Bestimmungseinheit (12) bestimmt, dass die Rückspülgeschwindigkeit des Ionenaustauschharzes (118) über einer vorgegebenen Schwellenrückspülgeschwindigkeit liegt, die Bereitstellungseinheit (14) Informationen liefert, um eine Aktualisierung des Ionenaustauschharzes (118) zu empfehlen.

8. Betriebsunterstützungseinrichtung nach Anspruch 6, wobei

die Elektrolyse-Einrichtung (200) mit einem Ionenaustauschharz (118) versehen ist, das zumindest einen Teil des in der ersten wässrigen Lösung enthaltenen Erdalkalimetalls entfernt, und
wenn die Bestimmungseinheit (12) bestimmt, dass die Regenerationsgeschwindigkeit des Ionenaustauschharzes (118) kürzer als eine vorbestimmte Zeitspanne ist, die Bereitstellungseinheit (14) Informationen liefert, die darauf hinweisen, dass eine Aktualisierung des Ionenaustauschharzes (118) empfohlen wird.

9. Betriebsunterstützungsverfahren, umfassend:

zunächst durch eine Vorhersageeinheit (10) einen empfohlenen Wartungszeitpunkt vorherzusagen, zu dem ein Zielobjekt in einer Elektrolyse-Einrichtung (200) in einen empfohlenen Wartungszustand versetzt wird; und
zunächst Bereitstellen durch eine Bereitstellungseinheit (14) von Informationen, um zu empfehlen, dass die Wartung des Zielobjekts zu einem ersten Wartungszeitpunkt durchgeführt werden sollte, **dadurch gekennzeichnet, dass** das Betriebsunterstützungsverfahren weiter umfasst, zunächst Bestimmen durch eine Bestimmungseinheit (12) einer zeitlichen Beziehung zwischen einem vorbestimmten ersten Wartungszeitpunkt, zu dem das Zielobjekt gewartet werden kann, und dem empfohlenen Wartungszeitpunkt sowie einer zeitlichen Beziehung zwischen einem vorbestimmten zweiten Wartungszeitpunkt, zu dem das Zielobjekt gewartet werden kann, und dem empfohlenen Wartungszeitpunkt, wobei die zweite Wartungszeit nach der ersten Wartungszeit erfolgt, wobei
Durchführen des ersten Bereitstellens das Bereitstellen der Informationen durch die Bereitstellungseinheit (14) ist, zur Empfehlung, dass die Wartung des Zielobjekts zum ersten Wartungszeitpunkt durchgeführt werden sollte, wenn beim Durchführen des ersten Bestimmens bestimmt wird, dass der empfohlene Wartungszeitpunkt nach dem ersten Wartungszeitpunkt und vor dem zweiten Wartungszeitpunkt liegt, wobei

die erste Vorhersage die Vorhersage einer ersten empfohlenen Wartungszeit einschließt, zu der das Zielobjekt in den empfohlenen Wartungszustand versetzt wird, als empfohlene Wartungszeit durch die Vorhersageeinheit (10),

Erfassen, durch eine Erfassungseinheit (16) eines Zustands des Zielobjekts,
Vorhersagen, durch die Vorhersageeinheit (16), eines zweiten empfohlenen Wartungszeitpunkts, zu dem das Zielobjekt in den empfohlenen Wartungszustand versetzt wird, als empfohlener Wartungszeitpunkt, auf der Grundlage des von der Zustandserfassungseinheit erfassten Zustands des Zielobjekts,
Erfassen, durch eine an der Elektrolyse-Einrichtung (200) vorgesehene Erfassungseinheit (99), mindestens eines von einem Ion eines Erdalkalimetalls, einem Aluminiumion, einem Nickelion, einem Eisenion, einem Jodion, Silizium, einer Sulfation, einem Schwebstoff oder einem in der ersten wässrigen Lösung enthaltenen organischen Stoff, und

wenn die Detektionseinheit (99) mindestens eines von einem Ion eines Erdalkalimetalls, einem Aluminiumion, einem Nickelion, einem Eisenion, einem Jodion, Silizium, ein Sulfation, einen Schwebstoff oder einen organischen Stoff mit einer Konzentration, die gleich oder höher als eine vorbestimmte Konzentration in der ersten wässrigen Lösung ist, erfasst, Bestimmen durch die Bestimmungseinheit (12), dass ein chemisches Mittel, das mindestens einen der Schwebstoffe oder den organischen Stoff ausfällt, in die erste wässrige Lösung eingebracht oder darin erhöht wird.

10. Betriebsunterstützungsprogramm, das einen Computer dazu veranlasst, das Betriebsunterstützungsverfahren nach Anspruch 9 auszuführen.

**Revendications**

1. Appareil d'aide au fonctionnement comprenant :

une unité de prédiction (10), qui prévoit un temps de maintenance recommandé auquel un objet cible dans un appareil d'électrolyse (200) est placé dans un état de maintenance recommandé ; et
une unité de fourniture (14), qui fournit des informations pour recommander qu'une maintenance de l'objet cible soit effectuée à un premier temps de maintenance,
**caractérisé en ce que** l'appareil d'aide au fonctionnement comprend en outre une unité de détermination (12) qui détermine une relation temporelle entre un premier temps de maintenance prédéterminé, auquel l'objet cible peut faire l'objet d'une maintenance, et le temps de maintenance recommandé, ainsi qu'une relation temporelle entre un second temps de maintenance prédéterminé, auquel l'objet cible peut faire l'objet d'une maintenance et le temps de maintenance recommandé, dans lequel le second temps de maintenance vient après le premier temps de maintenance, dans lequel
lorsqu'il est déterminé par l'unité de détermination (12) que le temps de maintenance recommandé vient après le premier temps de maintenance et avant le second temps de maintenance, l'unité de fourniture (14) fournit l'information recommandant que la maintenance de l'objet cible soit effectuée au premier temps de maintenance, dans lequel
l'unité de prédiction (10) prédit un premier temps de maintenance recommandé auquel l'objet cible est mis dans l'état de maintenance recommandé, en tant que temps de maintenance recommandé,
comprenant en outre une unité (16) d'acquisition d'état, qui acquiert un état de l'objet cible, dans lequel
l'unité de prédiction (16) prédit en outre un second temps de maintenance recommandé auquel l'objet cible est mis dans l'état de maintenance recommandé, en tant que temps de maintenance recommandé, sur la base de l'état de l'objet cible acquis par l'unité d'acquisition d'état, et dans lequel
l'appareil d'électrolyse (200) présente un électrolyseur (90),
l'électrolyseur (90) inclut une membrane (84) échangeuse d'ions ainsi qu'une chambre d'anode (79) et une chambre de cathode (98) séparées par la membrane (84) échangeuse d'ions,
une première solution aqueuse, qui est une solution aqueuse d'un chlorure de métal alcalin, est introduite dans la chambre d'anode (79),
l'appareil d'électrolyse (200) est pourvu d'une unité de détection (99) qui détecte au moins l'un parmi un ion d'un métal alcalino-terreux, un ion aluminium, un ion nickel, un ion fer, un ion iode, du silicium, un ion sulfate, une matière en suspension ou une matière organique contenus dans la première solution aqueuse, et

lorsque l'unité de détection (99) détecte au moins l'un parmi un ion d'un métal alcalino-terreux, un ion aluminium, un ion nickel, un ion fer, un ion iode, du silicium, un ion sulfate, une matière en suspension ou une matière organique avec une concentration égale ou supérieure à une concentration prédéterminée dans la première solution aqueuse, l'unité de détermination (12) détermine qu'un agent chimique qui précipite au moins l'une parmi la matière en suspension ou la matière organique est introduit ou augmenté dans la première solution aqueuse.

2. Appareil d'aide au fonctionnement selon la revendication 1, dans lequel l'unité (16) d'acquisition d'état acquiert l'état de l'objet cible au premier temps de maintenance.

3. Appareil d'aide au fonctionnement selon la revendication 2, dans lequel, lorsqu'il est déterminé par l'unité de détermination (12) que le premier temps de maintenance recommandé vient après le premier temps de maintenance et avant le second temps de maintenance, l'unité (16) d'acquisition d'état mesure l'état de l'objet cible au premier temps de maintenance, et l'unité de prédiction (10) prédit le second temps de maintenance recommandé au premier temps de maintenance.

4. Appareil d'aide au fonctionnement selon l'une quelconque des revendications 1 à 3, dans lequel, lorsque l'unité de détermination (12) détermine que le premier temps de maintenance recommandé vient après le second temps de maintenance et détermine que le second temps de maintenance recommandé vient après le premier temps de maintenance et avant le second temps de maintenance, l'unité de fourniture (14) fournit les informations pour recommander que la maintenance de l'objet cible soit effectuée au premier temps de maintenance.

5. Appareil d'aide au fonctionnement selon l'une quelconque des revendications 1 à 3, dans lequel, lorsque l'unité de détermination (12) détermine que le premier temps de maintenance recommandé vient après le second temps de maintenance et détermine que le second temps de maintenance recommandé vient avant le premier temps de maintenance, une unité de commande (20) retarde le second temps de maintenance recommandé jusqu'au premier temps de maintenance.

6. Appareil d'aide au fonctionnement selon la revendication 1, dans lequel

l'appareil d'électrolyse (200) est pourvu d'un filtre (114) et d'un premier capteur de pression (122) qui mesure la pression de la première solution aqueuse,
au moins une partie de la matière en suspension contenue dans la première solution aqueuse est éliminée par passage à travers le filtre (114),
le premier capteur de pression (122) mesure une première pression de la première solution aqueuse qui n'est pas encore passée à travers le filtre et une seconde pression de la première solution aqueuse qui est passée à travers le filtre (114),
l'unité de détermination (12) détermine si la différence entre la première pression et la seconde pression se situe au-dessus d'une différence seuil prédéterminée, et
lorsque l'unité de détermination (12) détermine que la différence se situe au-dessus de la différence seuil, l'unité de fourniture (14) fournit des informations pour recommander la mise à jour du filtre (114).

7. Appareil d'aide au fonctionnement selon la revendication 6, dans lequel

l'appareil d'électrolyse (200) est pourvu d'une résine (118) échangeuse d'ions qui élimine au moins une partie du métal alcalino-terreux contenu dans la première solution aqueuse, et,
lorsqu'il est déterminé par l'unité de détermination (12) qu'une vitesse de rétrolavage de la résine (118) échangeuse d'ions se situe au-dessus d'une vitesse de rétrolavage seuil prédéterminée, l'unité de fourniture (14) fournit des informations pour recommander la mise à jour de la résine (118) échangeuse d'ions.

8. Appareil d'aide au fonctionnement selon la revendication 6, dans lequel

l'appareil d'électrolyse (200) est pourvu d'une résine (118) échangeuse d'ions qui élimine au moins une partie du métal alcalino-terreux contenu dans la première solution aqueuse, et
lorsqu'il est déterminé par l'unité de détermination (12) qu'une vitesse de régénération de la résine (118) échangeuse d'ions est inférieure à une période de temps prédéterminée, l'unité de fourniture (14) fournit des informations indiquant qu'une mise à jour de la résine (118) échangeuse d'ions est recommandée.

**9.** Procédé d'aide au fonctionnement comprenant :

une première prédiction, par une unité de prédiction (10), d'un temps de maintenance recommandé auquel un objet cible dans un appareil d'électrolyse (200) est placé dans un état de maintenance recommandé ; et une première fourniture, par une unité de fourniture (14), d'informations pour recommander que la maintenance de l'objet cible soit effectuée à un premier temps de maintenance, **caractérisé en ce que** le procédé d'aide au fonctionnement comprend en outre une première détermination, par une unité de détermination (12), d'une relation temporelle entre un premier temps de maintenance prédéterminé auquel l'objet cible peut faire l'objet d'une maintenance et le temps de maintenance recommandé ainsi qu'une relation temporelle entre un second temps de maintenance prédéterminé auquel l'objet cible peut faire l'objet d'une maintenance et le temps de maintenance recommandé, dans lequel le second temps de maintenance vient après le premier temps de maintenance, dans lequel

la réalisation de la première fourniture fournit, par l'unité de fourniture (14), les informations pour recommander que la maintenance de l'objet cible soit effectuée au premier temps de maintenance, lorsqu'il est déterminé, lors de la réalisation de la première détermination, que le temps de maintenance recommandé vient après le premier temps de maintenance et vient avant le second temps de maintenance,
dans lequel

la première prédiction inclut la prédiction, par l'unité de prédiction (10), d'un premier temps de maintenance recommandé auquel l'objet cible est mis dans l'état de maintenance recommandé, en tant que temps de maintenance recommandé,
l'acquisition, par une unité (16) d'acquisition d'état, d'un état de l'objet cible,
la prédiction, par l'unité de prédiction (16), d'un second temps de maintenance recommandé auquel l'objet cible est mis dans l'état de maintenance recommandé, en tant que temps de maintenance recommandé, sur la base de l'état de l'objet cible acquis par l'unité d'acquisition d'état,
la détection, par une unité de détection (99) prévue au niveau de l'appareil d'électrolyse (200), d'au moins l'un parmi un ion d'un métal alcalino-terreux, un ion aluminium, un ion nickel, un ion fer, un ion iode, du silicium, un ion sulfate, une matière en suspension ou une matière organique contenus dans la première solution aqueuse, et lorsque l'unité de détection (99) détecte au moins l'un parmi un ion d'un métal alcalino-terreux, un ion aluminium, un ion nickel, un ion fer, un ion iode, du silicium, un ion sulfate, une matière en suspension ou une matière organique avec une concentration égale ou supérieure à une concentration prédéterminée dans la première solution aqueuse, l'unité de détermination (12) détermine qu'un agent chimique qui précipite au moins l'une parmi la matière en suspension ou la matière organique est introduit ou augmenté dans la première solution aqueuse.

**10.** Programme d'aide au fonctionnement qui amène un ordinateur à mettre en œuvre le procédé d'aide au fonctionnement selon la revendication 9.

FIG.1

FROM RESIN TOWER 116

200

*FIG.2*

*FIG.3*

*FIG.4*

FIG.5

*FIG.6*

*FIG.7*

*FIG.8*

*FIG.9*

*FIG.10*

*FIG.11*

FIG.12

FIG.13

CURRENT EFFICIENCY CE
AND VOLTAGE CV

140

FIRST INFERRED
AMOUNT

AMOUNT OF
CARBON DIOXIDE

*FIG.14*

KIND OF
RAW SALT 110

142

SECOND INFERRED
AMOUNT

AMOUNT OF
CARBON DIOXIDE

*FIG.15*

INDUCED AMOUNT OF
CHEMICAL AGENT 111 OR
RUNNING STATUS OF
REMOVAL APPARATUS

143

THIRD INFERRED
AMOUNT

AMOUNT OF
CARBON DIOXIDE

*FIG.16*

TIME PERIOD AND SCALE
REGARDING UPDATE
OF ELECTROLYSIS
APPARATUS 200

144

THIRD INFERRED
AMOUNT

AMOUNT OF
CARBON DIOXIDE

*FIG.17*

FIG.18

FROM S116, S117, S118, S119, S120

S200

FIFTH
DETERMINATION STEP
(HAS OBJECT TO BE DETECTED
Db BEEN DETECTED IN FIRST AQUEOUS
SOLUTION 70?)

Yes

S202

INDUCTION STEP

No

S204

SIXTH
DETERMINATION STEP
(IS DIFFERENCE BETWEEN FIRST PRESSURE
P1 AND SECOND PRESSURE P2 ABOVE
THRESHOLD?)

Yes

S206

THIRD
PROVISION STEP

No

S208

SEVENTH
DETERMINATION STEP
(IS BACK WASHING SPEED OF ION
EXCHANGE RESIN 118 ABOVE
THRESHOLD?)

Yes

S210

FOURTH
PROVISION STEP

No

S212

EIGHTH
DETERMINATION
STEP (IS REGENERATION SPEED
OF ION EXCHANGE RESIN 118 SHORTER
THAN PREDETERMINED
TIME PERIOD?)

Yes

S214

FIFTH
PROVISION STEP

No

TO S216, S220, S224, S228

*FIG.19*

52

FROM S212

NINTH
DETERMINATION STEP
(ARE FLOW RATE F1 AND
FLOW RATE F2 WITHIN FLOW
RATE RANGE
Fr?) ~S216

Yes

No

TENTH
DETERMINATION STEP
(ARE TEMPERATURE T1 AND
TEMPERATURE T2 ABOVE
THRESHOLD
Tth?) ~S220

Yes

No

ELEVENTH
DETERMINATION STEP
(IS FIRST pH BELOW THRESHOLD Pth1
OR SECOND pH ABOVE THRESHOLD
Pth2?) ~S224

Yes

No

TWELFTH
DETERMINATION STEP
(IS PRESSURE Pr1 OF CHLORINE GAS
OR PRESSURE Pr2 OF HYDROGEN GAS
ABOVE THRESHOLD
Prth?) ~S228

Yes

No

FOURTEENTH
DETERMINATION STEP
(IS IT POSSIBLE TO PERFORM
CONTROL BY CONTROLLING
SECOND VALVE 68?) ~S231

Yes

No

S236
CONTROL STEP

Yes

THIRTEENTH
DETERMINATION STEP
(IS IT POSSIBLE TO PERFORM
CONTROL BY CONTROLLING
THIRD VALVE 69?) ~S230

No

S234
SIXTH
PROVISION STEP

TO S300

*FIG.20*

FROM
S234, S236

**S300**
FIFTEENTH
DETERMINATION STEP
(DOES CURRENT EFFICIENCY CE BECOME
BELOW THRESHOLD CEth?)

Yes → **S302** SEVENTH PROVISION STEP

No

**S304**
SIXTEENTH
DETERMINATION STEP
(DOES VOLTAGE CV EXCEED THRESHOLD
CVth?)

Yes → **S306** EIGHTH PROVISION STEP

No

**S308**
SEVENTEENTH
DETERMINATION STEP
(IS COATING AMOUNT BELOW
THRESHOLD?)

Yes → **S312** TENTH PROVISION STEP

No **S310**

NINTH PROVISION STEP

**S400**
EIGHTEENTH
DETERMINATION STEP
(SHOULD RUNNING OF ELECTROLYSIS
APPARATUS 200 BE
CONTINUED?)

Yes → TO S100

No

END

*FIG.21*

*FIG.22*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019019408 A
- WO 2019059321 A1
- EP 3690792 A1

- JP 2014070258 A
- JP 2002366023 A